# EUROPÄISCHE PATENTSCHRIFT

(11) **EP 3 753 869 B1**
(45) Veröffentlichungstag und Bekanntmachung des Hinweises auf die Patenterteilung: **25.09.2024**
(21) Anmeldenummer: 20173007.4
(22) Anmeldetag: 05.05.2020
(51) Int. Cl.: B65G 15/34, B29D 29/06, F16G 3/02, F16G 3/10

(54) **TRANSPORTBAND, VERWENDUNG, VERFAHREN UND FÖRDER- ODER KARTONZUSCHNITT-STAPELEINRICHTUNG**
CONVEYOR BELT, USE, METHOD AND CONVEYOR OR CARDBOARD BLANK STACKING DEVICE
BANDE TRANSPORTEUSE, UTILISATION, PROCÉDÉ ET DISPOSITIF D'EMPILAGE OU TRANSPORT DE DÉCOUPE CARTON

(30) Priorität: 21.06.2019 DE 202019103469 U
(43) Veröffentlichungstag der Anmeldung: 23.12.2020
(73) Patentinhaber: Heimbach GmbH, 52353 Düren (DE)
(72) Erfinder: PRASCHAK, Dirk, 41748 Viersen (DE)
(74) Vertreter: Paul & Albrecht Patentanwälte PartG mbB

(56) Entgegenhaltungen:
- EP-A1- 3 404 140
- WO-A1-97/09252
- DE-U1- 202018 103 781
- JP-A- 2017 172 641

## Beschreibung

Die Erfindung betrifft ein Transportband. Darüber hinaus betrifft die Erfindung die Verwendung eines solchen Bandes, eine Förder- oder Kartonzuschnitt-Stapeleinrichtung mit einem solchen Band und ein Verfahren zu dessen Herstellung.

Transportbänder, die auch als Förder(band)gurte bezeichnet werden können, kommen in verschiedenen Maschinen zum Einsatz, um Transportgut etwa zu transportieren, zuzuführen, abzulegen und/oder zu stapeln. Derartige Bänder befinden sich im montierten Zustand in Endloskonfiguration, umgreifen beispielsweise eine Rollenbahn einer Maschine in Endloskonfiguration.

Aus der DE 40 34 424 A1 geht ein Förderbandgurt hervor, der sich dadurch auszeichnet, dass er insbesondere an seinen Rändern eine in Längsrichtung des Gurtes verlaufende Profilierung aufweist, die als Nuten bzw. als Vertiefungen und/oder als Federn bzw. Erhöhungen ausgebildet sind und zur präzisen Führung des Gurtes durch eine Fördereinrichtung und/oder zu seiner Abdichtung dienen.

Die DE 10 2014 010 732 A1 offenbart ein Endlosband, an dem eine Mehrzahl von Nocken befestigt sind. Diese sind an der Innenseite und in Längsrichtung/Transportrichtung des Bandes auf einer geraden Linie angeordnet und greifen in Führungsnuten am Umfang von drehbaren, angetriebenen Walzen/Rollen ein, über welche das Endlosband läuft.

Es sind Maschinen bekannt, die zum Einsatz kommen, um Kartonzuschnitte zu transportieren, zuzuführen und abzulegen, insbesondere zu Stapeln stapeln. Im Rahmen solcher Maschinen kommen Transportbänder zum Einsatz, welche in Endloskonfiguration montiert Kartonzuschnitte fördern. In der Regel werden transportierte Kartonzuschnitte am Ende des Band- bzw. Gurt-Obertrums von einer Kartonstapel-Scheibenwalze erfasst und kontinuierlich Stapel mit einer definierten Anzahl von Kartonzuschnitten zwischen Transportband und Scheibenwalze eingeklemmt und auf einer höhenverfahrbaren Plattform zu einem wachsenden Kartonstapel abgetafelt.

Der Anmelderin ist bekannt, dass in solchen Maschinen Transportbänder zum Einsatz kommen, die einen Textilträger umfassen, der an seiner Vorderseite mit einer kompletten, sich über seine gesamte Ausdehnung erstreckenden, geschlossenen Flächenbeschichtung versehen ist. Der Anmelderin ist weiterhin bekannt, dass die geschlossene Flächenbeschichtung Rillen bzw. streifenförmige Vertiefungen definierter Breite und Abstände aufweist, die durch Material abnehmende bzw. abtragende Verfahren, beispielsweise durch Schleifen der geschlossenen Beschichtung erhalten wurden. Dabei wird Material derart abgetragen, dass eine Vertiefung erhalten, die Beschichtung jedoch nicht über ihre gesamte Dicke entfernt wird. Die Breite und Abstände der Rillen sind derart gewählt, dass die einzelnen Walzenscheiben der dem Transportband zugeordneten Scheibenwalze jeweils einem nicht abgetragenen, streifenförmigen Bereich des Bandes gegenüberliegen und mit diesem zur Förderung bzw. zum Abtafeln der Kartonzuschnitte zusammenwirken.

Das Dokument WO 97/09252 A1 offenbart ein Transportband mit einem Träger und einer Mehrzahl von beabstandet zueinander angeordneten, aus einem Beschichtungsmaterial bestehenden Beschichtungsstreifen, die mit dem Träger verbunden sind. Das Transportband besteht dabei mit Ausnahme einer eingebetteten, verstärkenden Gewebestruktur oder verstärkenden Stahldrähten als Ganzes aus einem Gummimaterial.

Die EP 3 404 140 A1 offenbart ein Transfer- oder Schuhpressenband für eine Papiermaschine. Dieses umfasst einen Träger und eine papier- und/oder maschinenseitig des Trägers angeorndnete strukturierte Deckschicht mit einer Vielzahl von Erhebungen und Vertiefungen. Bei dem Träger kann es sich beispielsweise um ein Gewebe, Spiralgliederband, Gewirke oder Fadengelege handeln. Die strukturierte Deckschicht besteht aus einem Elastomermaterial und erstreckt sich über die gesamte Ausdehung des Trägers. Die EP 3 404 140 A1 offenbart ein Transportband gemäß dem Oberbegriff des Anspruchs 1.

Die JP 2017 172641 A offenbart einen Industriegurt mit einem Bandkörper, verstärkenden Kerndrähten sowie einer Mehrzahl von Zähnen. Mit Ausnahme der Kerndrähte besteht das Band als Ganzes aus einem Gummimaterial.

Die Anmelderin erachtet an den ihr bekannten Transportbändern als nachteilig, dass diese luftundurchlässig sind und teilweise recht scharfe, stoßanfällige Kanten aufweisen, die sich durch die nachträgliche materialabtragende Bearbeitung der Flächenbeschichtung ergeben.

Ausgehend von dem Stand der Technik ist es eine Aufgabe der vorliegenden Erfindung, ein verbessertes Transportband anzugeben, welches die vorgenannten Nachteile vermeidet. Darüber hinaus ist es eine Aufgabe der vorliegenden Erfindung, ein Verfahren zu dessen Herstellung anzugeben.

Die erstgenannte Aufgabe wird gelöst durch ein Transportband gemäß Anspruch1.

Das erfindungsgemäße Transportband zeichnet sich mit anderen Worten im Gegensatz zu den der Anmelderin bekannten Bändern nicht durch eine sich über die gesamte Ausdehnung des Trägers in Transport- sowie Querrichtung erstreckende, geschlossene Beschichtung aus, die nachträglich materialabtragend bearbeitet wird. Der Träger ist vielmehr zwar mit einer Mehrzahl von Beschichtungsstreifen versehen, weist jedoch auch Bereiche auf, in denen er frei von Beschichtungsmaterial ist, also unbeschichtete Bereiche. Das erfindungsgemäße Band wird durch ausschließlich selektives Beschichten des Trägers erhalten bzw. umfasst einen ausschließlich selektiv, insbesondere nur im Bereich der Beschichtungsstreifen beschichteten Träger.

Durch die Beschichtungsstreifen können einerseits gute Förderungseigenschaften erhalten werden, etwa ein optimaler Reibwert insbesondere der für die Auflage von Transport bestimmten Vorderseite. Gleichzeitig kann das Band, da es erfindungsgemäß auch Bereiche aufweist, die frei von Beschichtungsmaterial sind, sich auch durch Eigenschaften des Trägers auszeichnen. Umfasst das Band beispielsweise einen luftdurchlässigen Träger, kann es insgesamt luftdurchlässig sein, auch wenn dies nicht für die Beschichtungsstreifen gilt. Im Ergebnis kann eine ideale Kombination von Eigenschaften erhalten werden.

Darunter, dass der Träger bereichs- bzw. abschnittsweise frei von Beschichtungsmaterial ist, ist zu verstehen, dass er in dem oder den betroffenen Bereichen/Abschnitten an keiner seiner beiden Seiten und auch nicht in seinem Inneren Beschichtungsmaterial aufweist, also über seine gesamte Dicke frei von einer Beschichtung bzw. frei von Beschichtungsmaterial ist.

In bevorzugter Ausgestaltung befindet sich Beschichtungsmaterial ausschließlich im Bereich der Beschichtungsstreifen und zwischen diesen ist (insbesondere über die gesamte Dicke des Trägers) kein Beschichtungsmaterial vorhanden.

In die beabstandeten Beschichtungsstreifen ist insbesondere jeweils ein Abschnitt bzw. Bereich des Trägers, insbesondere zumindest ein Teil des sich unterhalb des jeweiligen Beschichtungsstreifens erstreckenden Abschnitts/Bereichs des Trägers zumindest teilweise eingebettet. Der Träger ist insbesondere nicht über seine gesamte Dicke in die Beschichtungsstreifen eingebettet. Ist dies der Fall, weist der Träger bevorzugt unterhalb der Beschichtungsstreifen jeweils noch einen Bereich/Abschnitt auf, der frei von Beschichtungsmaterial ist. Die Rückseite des Trägers bildet weiterhin bevorzugt die Rückseite des Transportbandes.

Es sei angemerkt, dass es prinzipiell auch möglich ist, dass die Rückseiten der Beschichtungsstreifen die Rückseite des Transportbandes definieren bzw. bilden. Dies insbesondere dann, wenn der Träger im Bereich der Beschichtungsstreifen nicht nur teilweise sondern vollständig, über seine gesamte Dicke in die Beschichtungsstreifen eingebettet ist.

Der Träger ist bevorzugt derart rückseitig in die Beschichtungsstreifen eingebettet, dass er sich nicht bis zu den Vorderseiten der Beschichtungsstreifen erstreckt.

Die Vorderseiten der Beschichtungsstreifen bilden bzw. definieren bevorzugt (zusammen) die Vorderseite des Bandes und somit die für die Auflage von Transportgut bestimmte Fläche. Die Vorderseite des Bandes ist dann insbesondere eine unterbrochene bzw. eine durch die beabstandeten Vorderseiten der beabstandeten Streifen zusammengesetzte Vorderseite.

Die Beschichtungsstreifen sind zweckmäßiger Weise nebeneinanderliegend angeordnet. Es wechseln sich bevorzugt Beschichtungsstreifen und unbeschichtete Bereiche, in denen der Träger frei von Beschichtungsmaterial ist, ab. Die unbeschichteten Bereiche sind bevorzugt ebenfalls streifenförmig Besonders bevorzugt liegt jeweils zwischen zwei benachbarten Beschichtungstreifen ein ebenfalls streifenförmiger unbeschichteter Bereich.

Die Beschichtungsstreifen sind in bevorzugter Ausgestaltung aus einem wenigstens ein Polymer, insbesondere Polyharnstoff und/oder Polyurethan umfassenden oder daraus bestehenden Beschichtungsmaterial hergestellt. Diese Materialien haben sich als besonders geeignet für die Beschichtungsstreifen erwiesen, deren Vorderseiten die für die Auflage von Transportgut bestimmte Vorderseite des Transportbandes bilden bzw. definieren. Transportgüter, beispielsweise Kartonzuschnitte können auf der Oberfläche der Beschichtungsstreifen infolge eines optimalen Reibwertes haftend besonders gut und sicher gefördert/transportiert werden.

Hinsichtlich des Beschichtungsmaterials, aus dem die Beschichtungsstreifen bestehen, gilt in weiterer bevorzugter Ausgestaltung der Erfindung, dass es ein solches ist, welches aus einem reaktiven System zur Herstellung einer Elastomerbeschichtung, bevorzugt einem Mehrkomponentensystem mit zwei oder mehr Komponenten hergestellt wurde, das sich insbesondere durch eine Topfzeit von weniger als 30 Sekunden, bevorzugt weniger als 15 Sekunden, besonders bevorzugt weniger als 10 Sekunden auszeichnet. Dies hat sich als besonders geeignet erwiesen.

Reaktive Systeme härten aus, indem sich die in den Komponenten enthaltenen reaktiven Gruppen miteinander vernetzen. Unter der Topfzeit ist dabei diejenige Zeit zu verstehen, innerhalb derer die gemischten Ausgangsstoffe noch fließfähig sind. Es ist insbesondere die Topfzeit gemäß DIN 16 945 gemeint. Polyharnstoff-Polymere beispielsweise werden in der Regel über ein 2-Komponenten-System erzeugt, wobei die eine Komponente, insbesondere ein isocyanathaltiges Prepolymer, mit einem mehrfunktionellen Amin oder Amingemisch als weitere Komponente zu Polyharnstoff reagiert.

Rein beispielshaft seien für 2-Komponenten-Systeme zum Erhalt des Beschichtungsmaterials genannt: Isocyanathaltiges Prepolymer, das mit Polyamin zu Polyharnstoff oder mit Polyalkohol (Polyol) zu Polyurethan reagiert.

Bei dem Beschichtungsmaterial der Beschichtungsstreifen kann es sich insbesondere um ein solches handeln, das sich durch eine Viskosität von weniger als 3000 mPa s, bevorzugt weniger als 1000 mPa s bei einer im Bereich von 20°C bis 120°C, insbesondere 60 bis 90°C liegenden Verarbeitungstemperatur auszeichnet. Eine Viskosität des Beschichtungsmaterials in diesem Bereich hat sich als besonders geeignet erwiesen, insbesondere für einen Sprüh-Auftrag. Was die Bestimmung der Viskosität angeht, ist insbesondere auf die ISO 3219:1993 abzustellen.

Polyharnstoffrohstoffe beispielsweise werden bevorzugt bei einer Temperatur von 60 bis 90°C verarbeitet und zeichnen sich in diesem Temperaturbereich durch eine Viskosität von weniger als 1000 mPa s aus.

Eine weitere besonders bevorzugte Ausführungsform zeichnet sich dadurch aus, dass die Beschichtungsstreifen erhalten wurden, indem das Beschichtungsmaterial bzw. miteinander zu dem Beschichtungsmaterial reagierende Ausgangsstoffe auf den Träger insbesondere durch ein Sprüh-Verfahren aufgebracht wurde bzw. wurden. Das Beschichtungsmaterial bzw. Ausgangsstoffe, die miteinander zu einem Beschichtungsmaterial reagieren, wurde insbesondere im flüssigen Zustand auf den Träger aufgesprüht. Es kann insbesondere in einem Zustand auf den Träger aufgesprüht worden sein, in dem es sich durch eine Viskosität von weniger als 3000 mPa s, besonders bevorzugt weniger als 1000 mPa s auszeichnete.

Das Sprüh-Verfahren hat sich als besonders geeignet zum Erhalt der Beschichtungsstreifen erwiesen. Ein Sprühauftrag kann einerseits vergleichsweise zügig durchgeführt werden. Auch ist es möglich, eine auch über größere Flächen gleichmäßige Schichtdicke zu erhalten. Im flüssigen Zustand aufgesprühtes Beschichtungsmaterial kann ferner in den Träger eindringen, so dass nach dem Aushärten des Materials Beschichtungsstreifen erhalten werden, in welche der Träger zumindest teilweise bzw. abschnittsweise eingebettet ist, so dass die Beschichtungsstreifen fest mit dem Träger verbunden sind. Dafür ist nur ein Herstellungsschritt erforderlich. Werden die Streifen hingegen erst hergestellt und dann an dem Träger befestigt, etwa aufgeklebt oder dergleichen, ist der Aufwand höher. Es kann sein, dass die Beschichtungsstreifen schichtweise hergestellt bzw. aufgebaut werden bzw. wurden.

Kommt ein Sprüh-Verfahren zum Einsatz, kann die Streifenstruktur besonders einfach durch Vorsehen einer Maskierung realisiert werden. Eine weitere besonders bevorzugte Ausführungsform zeichnet sich daher dadurch aus, dass die Beschichtungsstreifen hergestellt wurden, indem vorderseitig in einem vorgegebenen Abstand von insbesondere 1 bis 10 mm vor oder ohne Abstand unmittelbar auf dem Träger eine den Träger teilweise maskierende, Maskierungsstreifen umfassende Maskierungsanordnung angeordnet und das Beschichtungsmaterial auf den durch die Maskierungsanordnung teilweise verdeckten Träger durch ein Sprüh-Verfahren aufgebracht wurde. Es sei angemerkt, dass, auch wenn ein Sprühverfahren sich als besonders vorteilhaft erwiesen hat, andere Verfahren benfalls zum Einsatz kommen können, insbesondere Druck-, Vorhangs-, Extrusionsverfahren, Gießverfahren sowie ein Auftrag per Breitschlitzdüse.

Der Träger ist bevorzugt luftdurchlässig. Als vorteilhaft kann in diesem Zusammenhang angesehen werden, dass beim Ablegen einer größeren Fläche auf ein solches Band die Luft nicht nur seitlich, sondern auch durch den Träger entweichen kann. Somit ist zu erwarten, dass der Kontakt zwischen zu beförderndem Gut und dem Transportband zügiger hergesetellt wird als bei einem luftundurchlässigen Transportband.

Bei dem Träger handelt es sich um ein SpiralgliederbandDiese Ausgestaltung hat sich als besonders geeigneter Träger erwiesen. Auf diesem können gut - etwa durch Aufsprühen eines Beschichtungsmaterials - Beschichtungsstreifen hergestellt werden. Die Trägerstruktur ist ferner luftdurchlässig, was sich als sehr vorteilhaft erwiesen hat. Ein Spiralgliederband umfasst in der Regel eine Vielzahl von Wendeln, deren Windungen reißverschlussartig ineinandergreifen, und die mit Steckdrähten, die in Kanäle eingeschoben sind, die durch ineinandergreifende Windungen benachbarter Wendeln definiert werden, verbunden sind. Die Wendeln und Steckdrähte des Spiralgliederbandes erstrecken sich dann bevorzugt quer, besonders bevorzugt zumindest im Wesentlichen orthogonal zur Transport- bzw. Laufrichtung des Transportbandes, wodurch eine hohe Flexibilität in einer Richtung bei gleichzeitig hoher Festigkeit des Transportbandes erreicht wird. Insbesondere für den Fall, dass das erfindungsgemäße Transportband um eine Rollenbahn einer Fördereinrichtung gelegt wird, hat sich ein Spiralgliederband als Träger als besonders geeignet erwiesen. Selbst für den Fall, dass die Montage an einer Rollenbahn mit stirnseitigen Umlenkrollen vergleichsweise geringen Durchmessers, von etwa nur wenigen Zentimetern zu erfolgen hat, bietet ein Spiralgliederband eine ausreichende Flexibilität bei gleichzeitig hoher Festigkeit. Weitere erhebliche Vorteile eines Spiralgliederbandes als Träger bestehen darin, dass es sehr einfach von einer Endloskonfiguration in eine offene Konfiguration und umgekehrt gebracht werden kann, dies insbesondere allein durch Entfernen bzw. Setzen eines einzigen Steckdrahtes, und dass ein Spiralgliederband in Endloskonfiguration überall durch eine gleiche, hohe Festigkeit ausgezeichnet ist, insbesondere keine nachträglich herzustellenden, schwächeren Nahtstellen aufweist. Das Spiralgliederband kann in Weiterbildung zusätzlich zu Steckdrähten Fülldrähte aufweisen. Die Fülldrähte erstrecken sich zweckmäßiger Weise zumindest im Wesentlichen parallel zu den Steckdrähten, also ebenfalls quer bzw. orthogonal zur Transport-/Laufrichtung des Bandes und/oder sind als Flachdrähte ausgestaltet. Das Vorsehen von Fülldrähten in einem Spiralgliederband ist besonders vorteilig, wenn zum Erhalt der Beschichtungsstreifen ein flüssiges Beschichtungsmaterial auf das Spiralgliederband aufgesprüht wird. Dann können Fülldrähte ein vollständiges Durchdringen des Trägers mit Beschichtungsmaterial oder ein Herauslaufen von Beschichtungsmaterial auf der gegenüberliegenden Seite verhindern.

Die erfindungsgemäß vorgesehenen Beschichtungsstreifen sind insbesondere nebeneinanderliegend angeordnet. In besonders vorteilhafter Ausgestaltung wechseln Beschichtungsstreifen und unbeschichtete Bereiche, in denen der Träger frei von Beschichtungsmaterial ist, ab. Dann kann jeweils zwischen zwei benachbarten Beschichtungstreifen ein ebenfalls streifenförmiger unbeschichteter Bereich liegen. Es liegt mit anderen Worten eine zu einem Zebrastreifen korrespondierende Ausgestaltung vor. Dies hat sich als ganz besonders geeignet erwiesen.

Eine weitere besonders vorteilhafte Ausführungsform zeichnet sich dadurch aus, dass die Ausdehnung der Beschichtungsstreifen in Querrichtung in Richtung der Vorderseite des Bandes zumindest über einen Teil der Ausdehnung der Beschichtungsstreifen in dieser Richtung abnimmt oder zunimmt. Bevorzugt nimmt die Breite der Beschichtungstreifen (Ausdehnung in Querrichtung) in Richtung der Vorderseite hin (in Richtung der Dicke der Streifen) ab, wobei dies zumindest über einen Abschnitt der Ausdehnung der Streifen in dieser Richtung der Fall ist. Die Breite verjüngt sich praktisch in Richtung der Vorderseite.

In weiterer ganz besonders vorteilhafter Ausgestaltung sind zumindest zwei Längskanten und/oder zumindest zwei Querkanten bevorzugt jedes Beschichtungsstreifens, bevorzugt die beiden näher der oder an der Vorderseite liegenden Längskanten und/oder Querkanten insbesondere jedes Beschichtungsstreifens abgerundet. Sind die Längskanten und/oder Querkanten abgerundet und nicht scharf, liegt eine geringere Stoßanfälligkeit vor. Es kann vermieden werden, dass Transportgut an scharfen Kanten hängen bleibt oder sich verkeilt. Eine Beschädigung von Transportgut und/oder Beschichtungsstreifen kann zuverlässig vermieden werden.

Die Beschichtungsstreifen können sich weiterhin durch einen im Wesentlichen viereckigen Querschnitt auszeichnen.

Was die Form der Beschichtungsstreifen angeht, hat sich ferner als besonders geeignet erwiesen, wenn sich diese in der Aufsicht auf die Vorderseite des Bandes in Nicht-Endloskonfiguration betrachtet durch eine zumindest im Wesentlichen rechteckige Kontur auszeichnen. Wechseln sich Beschichtungsstreifen und ebenfalls streifenförmige unbeschichtete Bereiche ab, kann dies bevorzugt auch für die unbeschichteten Bereiche gelten (in Analogie zu einem Zebrastreifen).

Die Beschichtungsstreifen erstrecken sich in zweckmäßiger Weise zumindest im Wesentlichen parallel zueinander.

Sie können sich durch eine Ausdehnung in Transportrichtung des Bandes auszeichnen, welche mindestens das Zehnfache, bevorzugt mindestens das Zwanzigfache, besonders bevorzugt mindestens das Fünfzigfache von deren Ausdehnung in Querrichtung beträgt. Die Beschichtungsstreifen sind dann mit anderen Worten länglich und zeichnen sich durch eine Länge aus, die deren Breite um ein Vielfaches überschreitet. Die Streifen erstrecken sich mit ihrer Längsrichtung in Transportrichtung des Bands.

Zumindest einige Beschichtungsstreifen zeichnen sich weiter bevorzugt durch die gleiche Form aus. Zumindest einige Beschichtungsstreifen können sich auch durch eine zumindest im Wesentlichen gleiche Dimensionierung auszeichnen. Es kann sein, dass dies für alle vorgesehenen Beschichtungsstreifen gilt. Es ist jedoch auch möglich, dass einige Streifen sich unterscheiden. Beispielsweise können sich zwei der Beschichtungsstreifen bis unmittelbar an gegenüberliegende Ränder des Bandes erstrecken und diese Streifen etwas breiter sein als die weiteren, zwischen diesen beiden Streifen liegenden Streifen. Alle weiteren Beschichtungsstreifen, also die verbleibenden Streifen mit Ausnahme der direkt am Rand liegenden Beschichtungsstreifen können sich dann durch die gleiche Form und/oder zumindest im Wesentlichen gleiche Dimensionierung auszeichnen.

Unter im Wesentlichen gleicher Dimensionierung ist insbesondere zu verstehen, dass die Ausdehnungen der Beschichtungsstreifen in Längsrichtung um maximal 20%, insbesondere maximal 10%, bevorzugt maximal 5% abweichen, und die Ausdehnungen der Beschichtungsstreifen in Querrichtung um maximal 20%, insbesondere maximal 10%, bevorzugt maximal 5% abweichen und die Ausdehnungen der Beschichtungsstreifen in Dickenrichtung um maximal 20%, insbesondere maximal 10%, bevorzugt maximal 5% abweichen.

Die Ausdehnung der Beschichtungsstreifen in Transportrichtung kann weiterhin mindestens 80%, bevorzugt mindesten 90%, besonders bevorzugt mindestens 100% der Ausdehnung des Trägers in Transportrichtung betragen.

Das erfindungsgemäße Transportband kann in einer offenendigen Konfiguration bereitgestellt werden und dann auf besonders komfortable Weise, insbesondere für die Installation in einer Fördereinrichtung oder einer Kartonzuschnitt-Stapeleinrichtung, in eine Endloskonfiguration gebracht werden.

Der Träger und die Beschichtungsstreifen sind dann offenendig ausgebildet, mit jeweils zwei für die bzw. in Endloskonfiguration aneinanderzulegenden bzw. miteinander zu verbindenden Endbereichen.

Das erfindungsgemäße Transportband kann in Weiterbildung wenigstens eine Nahtklappe, bevorzugt mehrere Nahtklappen aufweisen. Bevorzugt ist wenigstens eine Nahtklappe in einem der beiden in Endloskonfiguration aneinanderzulegenden Endbereichen vorgesehen. Die Nahtklappe bzw. die Nahtklappen sind bevorzugt derart ausgebildet, dass sie in Endloskonfiguration zum Erhalt einer geschlossenen, ebenen Oberfläche einen Verbindungsbereich des Trägers, in dem eine Verbindung zum Erhalt der Endloskonfiguration hergestellt wird bzw. werden kann, übergreifen können bzw. übergreifen. Eine geschlossene, ebene Oberfläche ermöglicht einen besonders reibungsfreien und zuverlässigen Transport und schützt den Nahtbereich vor mechanischer Belastung.

Es kann insbesondere vorgesehen sein, dass zumindest ein Endbereich wenigstens eines, bevorzugt jedes Beschichtungsstreifens eine Nahtklappe bildet, die bevorzugt einen Abschnitt des oder des jeweiligen Beschichtungsstreifens umfasst oder durch einen Abschnitt des oder des jeweiligen Beschichtungsstreifens gegeben ist, in dem der Träger nicht in den Beschichtungsstreifen eingebettet ist. Im Bereich der (jeweiligen) Nahtklappe ist der (jeweilige) Beschichtungsstreifen, wenn das Transportband sich noch in einem offenendigen, also nicht endlosen Zustand befindet, dann nicht mit dem sich ggf. darunter erstreckenden Trägerabschnitt verbunden sondern bildet (jeweils) eine Klappe, die, wenn der Träger durch Verbinden der beiden Enden in eine Endloskonfiguration gebracht wurde, die Verbindungsstelle übergreifen kann, so dass im Bereich des Beschichtungsstreifens bzw. der Beschichtungsstreifen eine geschlossene und ebene Oberfläche des Transportbandes erhalten wird.

Die Dicke der Beschichtungsstreifen im Bereich der Nahtklappen kann in weiterer bevorzugter Ausgestaltung die Dicke der Beschichtungsstreifen im verbleibenden Bereich des Transportbandes unterschreiten.

Auch kann vorgesehen sein, dass sich die Beschichtungsstreifen in Transportrichtung an einer Seite des Trägers bis über den Träger hinaus erstrecken. Dann können die sich über den Träger hinaus erstreckenden Abschnitte der Beschichtungsstreifen in Endloskonfiguration des Bandes Nahtklappen oder Abschnitte von Nahtklappen bilden, die sich bis über das andere Ende des Trägers erstrecken. Dies hat sich als besonders geeignet erwiesen, um eine optimale Endloskonfiguration zu erhalten. Die beiden Enden bzw. Endbereiche des Transportbandes in Transportrichtung sind die Enden bzw. Endbereiche, die in Endloskonfiguration aneinanderzulegen sind.

Alternativ oder zusätzlich können die Beschichtungsstreifen in Transportrichtung an einer Seite des Trägers in einem vorgegebenen Abstand vor dem Ende des Trägers enden.

Die Beschichtungsstreifen ragen dann mit anderen Worten an einer Seite des Trägers noch über diesen hinaus und/oder erstrecken sich an einer Seite des Trägers nicht bis zum Ende des Trägers sondern enden vorher. Besonders bevorzugt sind diese beiden Aspekte in Kombination verwirklicht. Dann sind an dem einen Ende des Trägers Nahklappen vorhanden und an dem anderen Ende steht Raum zur Verfügung, in welchem diese positioniert werden können, bzw. in dem die Nahtklappen unmittelbar auf den Träger aufgelegt/geklappt werden können.

Die Ausgestaltung kann ferner derart sein, dass die beiden Endbereiche des Transportbandes mit ihren freien Kanten bzw. Stirnseiten formschlüssig aneinander anlegbar sind bzw. in einer Endloskonfiguration anliegen. Auch ist es möglich, dass die Ausgestaltung derart ist, dass die freien Kanten bzw. Stirnseiten der beiden Endbereiche des Bandes in einer Endloskonfiguration des Bandes unter Bildung eines Spaltes voneinander geringfügig beabstandet sind.

Weiterhin bevorzugt ist die Ausgestaltung derart, dass in einer Endloskonfiguration des Transportbandes die Vorderseite(n) der Nahtklappe(n) einen Abschnitt der Vorderseite des Transportbandes bildet/bilden bzw. bilden kann/können und die Rückseite(n) der Nahtklappe(n) einem Abschnitt des Trägers gegenüberliegt/liegen.

Die Ausgestaltung kann auch derart sein, dass in einer Endloskonfiguration, wenn die beiden Endbereiche des Bandes aneinander anliegen, ein Transportband mit zumindest im Wesentlichen gleichbleibender Dicke erhalten wird.

Was die Dimensionierung des erfindungsgemäßen Bandes angeht, hat sich als besonders geeignet erwiesen, wenn die Ausdehnung des Bandes in Transportrichtung im Bereich von 1,5 m bis 10 m, bevorzugt 2,0 m bis 2,5 m oder 8,0 m bis 8,5 m liegt. Die Ausdehnung des Bandes in Querrichtung kann im Bereich von 2,0 m bis 4,0 m, bevorzug 2,5 m bis 3,5 m liegen.

Die Breite der Beschichtungsstreifen kann beispielsweise im Bereich von 50 mm bis 150 mm, bevorzugt 70 mm bis 130 mm, besonders bevorzugt 90 mm bis 110 mm liegen. Für den Abstand zwischen jeweils zwei benachbarten Beschichtungsstreifen hat sich als besonders geeignet erwiesen, wenn er im Bereich von 20 bis 60 mm, bevorzugt 30 bis 50 mm, besonders bevorzugt 35 bis 45 mm liegt. Unter dem Abstand ist dabei insbesondere der Bereich zwischen den zwei einander gegenüberliegenden Seitenkanten zweier nebeneinanderliegender, benachbarter Beschichtungsstreifen zu verstehen.

Hinsichtlich der Anzahl von Beschichtungsstreifen hat sich besonders geeignet erweisen, wenn wenigstens zehn Beschichtungsstreifen, bevorzugt wenigstens zwanzig Beschichtungsstreifen, besonders bevorzugt wenigstens dreißig Beschichtungsstreifen vorgesehen sind.

Die über die Vorderseite des Trägers vorstehende Schichtdicke der Beschichtungsstreifen kann im Bereich von 1,0 mm bis 5,0 mm, bevorzugt 1,5 bis 3,0 mm liegen.

Für die Dicke des Trägers hat sich als geeignet erwiesen, wenn sie im Bereich im Bereich von 1,0 mm bis 5,0 mm, bevorzugt 2,0 mm bis 4,0 mm liegt. Die über die Vorderseite des Trägers vorstehende Schichtdicke der Beschichtungsstreifen kann die Dicke des Trägers über- oder untersteigen oder auch dieser entsprechen.

In weiterer besonders vorteilhafter Ausgestaltung sind an der Rückseite des Bandes Führungselemente vorgesehen. Diese zeichnen sich bevorzugt durch einen zumindest im Wesentlichen trapezförmigen Querschnitt aus. Alternativ oder zusätzlich ist vorgesehen, dass jeweils ein Abschnitt des Trägers in die Führungselemente eingebettet ist. Die Führungselemente sind bevorzugt nebeneinanderliegend auf einer Linie angeordnet, insbesondere auf einer Linie, die zu einem Rand des Bandes zumindest im Wesentlichen parallel verläuft.

Die Führungselemente können, wenn das erfindungsgemäße Band in einer Fördereinrichtung oder in einer Kartonzuschnitt-Stapeleinrichtung montiert ist und umläuft, in eine oder mehrere in der Einrichtung, insbesondere in Walzen bzw. Rollen vorgesehene Führungsnuten eingreifen. Das Band kann so in quer zur Transportrichtung verlaufender Richtung in einer gewünschten Position bzw. Lage gehalten werden.

Die zweitgenannte Aufgabe wird gelöst durch ein Verfahren gemäß Anspruch 12.

Der Träger wird bevorzugt in offenendigem Zustand, etwa flach auf einem Untergrund aufliegend, bereitgestellt. Es ist jedoch auch nicht ausgeschlossenen, dass der Träger in Endloskonfiguration bereitgestellt wird, und die Beschichtungsstreifen auf dem sich in Endloskonfiguration befindlichen Träger hergestellt werden.

Das Beschichtungsmaterial bzw. Ausgangsstoffe, die miteinander zu einem Beschichtungsmaterial reagieren, wird/werden zweckmäßigerweise im flüssigen Zustand auf den Träger aufgebracht, insbesondere aufgesprüht. Es kann insbesondere in einem Zustand auf den Träger aufgebracht, insbesondere aufgesprüht werden, in dem es sich durch eine Viskosität von weniger als 3000 mPa s, bevorzugt weniger als 1000 mPa s auszeichnet. In einen solchen Zustand kann es beispielweise durch Erwärmung gebracht werden bzw. worden sein.

Alternativ zu einem Sprühverfahren können natürlich auch die vorstehend in Zusammenhang mit dem erfindungsgemäßen Transportband genannten Verfahren zum Einsatz kommen.

In Weiterbildung des erfindungsgemäßen Verfahrens ist vorgesehen, dass eine Maskierungsanordnung verwendet wird, welche wenigstens einen, bevorzugt mehrere Maskierungsstreifen umfasst, dessen bzw. deren Breite mit Abstand von der Vorderseite des Trägers zunimmt. Insbesondere gilt, dass die Breite der Maskierungsstreifen an der dem Träger näher liegenden, insbesondere auf dem Träger aufliegenden Unterseite die Breite an der von dem Träger abgewandten Oberseite untersteigt.

Der oder die, ggf. alle Maskierungsstreifen weisen bevorzugt (jeweils) zwei oder mehr übereinanderliegende Streifenelemente auf, die sich durch verschiedene Breiten auszeichnen. Besonders bevorzugt liegt dann das Streifenelement geringster Breite der Vorderseite des Trägers am nächsten bzw. auf der Vorderseite des Trägers auf, und das Streifenelement größter Breite ist bzw. wird von der Vorderseite am weitesten entfernt angeordnet, wenn die Maskierungsanordnung vor dem Träger positioniert ist bzw. wird. Dann liegen Maskierungsstreifen vor, deren Breite in senkrecht auf der Vorderseite des Trägers stehender Richtung zur Vorderseite hin stufenweise zunimmt. Jede Stufe ist durch ein Streifenelement einer Breite gegeben.

Wenigstens ein Streifenelement ist bevorzugt aus wasserundurchlässigem Material, zweckmäßiger Weise das oberste Streifenelement.

Insbesondere durch eine Anordnung mit zwei oder mehr aufeinanderliegenden Streifenelementen können Maskierungsstreifen erhalten werden, die sich durch eine in Richtung der Vorderseite zunehmende Breite auszeichnen, mittels derer insbesondere Beschichtungsstreifen mit abgerundeten Längskanten erhalten werden können. Das ober(st)e Streifenelement kann dann beispielsweise breiter sein als darunterliegende.

Es sei angemerkt, dass Maskierungsstreifen mit entsprechendem Querschnitt bzw. Profil nicht nur durch Übereinanderlegen mehrerer Streifenelemente verschiedener Breite erhalten werden können. Es ist auch möglich, dass Maskierungsstreifen solcher Form extrudiert oder gegossen werden. Ebenfalls können solche Elemente auch durch eine abtragende Bearbeitung (z. B. Fräsen oder Schleifen) aus Plattenmaterial gefertigt werden. Dann sind die Maskierungsstreifen jeweils einteilig.

Es hat sich herausgestellt, dass unter Verwendung einer Maskierungsanordnung mit einem, bevorzugt mehreren Maskierungsstreifen einer solchen Ausgestaltung auf einfache Weise Beschichtungsstreifen erhalten werden können, welche sich durch abgerundete, weiche Längskanten auszeichnen. Im Querschnitt betrachtet sind die vorderseitigen Ecken abgerundet. Beschichtungsstreifen mit abgerundeten Ecken haben sich als besonders geeignet erwiesen.

Eine weitere vorteilhafte Ausführungsform zeichnet sich dadurch aus, dass eine Maskierungsanordnung vor oder auf dem Träger angeordnet, die wenigstens einen Maskierungsstreifen umfasst, der wenigstens eine Vertiefung aufweist. Die wenigstens eine Vertiefung ist bevorzugt in der von dem Träger abzuwendenen bzw. bei bestimmungsgemäßem Gebrauch der Maskierungsanordnung von dem Träger abgewandten Oberseite des oder des jeweiligen Maskierungsstreifens vorgesehen. Die wenigstens eine Vertiefung ist weiter bevorzugt durch eine sich in Längsrichtung des bzw. des jeweiligen Maskierungsstreifens erstreckende Rille bzw. Rinne gegeben. Es kann sein, dass nur eine Vertiefung in dem oder dem jeweiligen Maskierungsstreifen vorgesehen ist. Beispielsweise kann eine sich insbesondere über die gesamte Ausdehnung des oder des jeweiligen Maskierungsstreifens erstreckende Rille bzw. Rinne vorgesehen sein. Die wenigstens eine Vertiefung kann sich durch einen rechteckigen Querschnitt auszeichnen. Es kann auch sein, dass die wenigstens eine Vertiefung einen konkav nach innen gewölbten Boden aufweist. Die Vertiefung kann auch dadurch gebildet werden, dass die insbesondere komplette Oberseite des oder des jeweiligen Maskierungsstreifens konkav nach innen gewölbt ist. Dann bildet die konkav nach innen gewölbte Oberseite des Maskierungsstreifens den konkav nach innen gewölbten Boden der Vertiefung. Nach innen gewölbt bedeutet insbesondere in Richtung der Unterseite des oder des jeweiligen Maskierungsstreifens, die dem Träger zuzuwenden bzw. zugewandt ist, gewölbt.

Besonders bevorzugt wird eine Maskierungsanordnung vor oder auf dem Träger angeordnet, die wenigstens einen Maskierungsstreifen umfasst, der sich durch eine Dicke im Bereich von 1 mm bis 12 mm, bevorzugt 3 mm bis 10 mm, besonders bevorzugt 5 mm bis 8 mm auszeichnet.

Weiterhin bevorzugt wird eine Maskierungsanordnung vor oder auf dem Träger angeordnet, die wenigstens einen Maskierungsstreifen umfasst, dessen Dicke zumindest 1,5 mal, bevorzugt doppelt so groß ist wie die gewünschte Dicke der herzustellenden Beschichtungsstreifen. Sollen Beschichtungsstreifen einer Dicke von beispielsweise 3 mm hergestellt werden, werden gemäß dieser vorteilhaften Ausführungsform Maskierungsstreifen verwendetet, die sich durch eine Dicke von 4,5 mm oder mehr, bevorzugt von 6 mm oder mehr auszeichnen.

Bevorzugt wird eine Maskierungsanordnung vor oder auf dem Träger angeordnet, die eine Mehrzahl von nebeneinanderliegenden, zumindest im Wesentlichen parallelen Maskierungsstreifen mit zumindest im Wesentlichen gleicher Länge umfasst, deren auf der einen Seite liegenden Enden und deren auf der anderen Seite liegenden Enden jeweils über einen quer zu den Maskierungsstreifen verlaufenden Naht-Maskierungsstreifen miteinander verbunden sind.

Unter zumindest im Wesentlichen parallel ist insbesondere zu verstehen, dass eine Abweichung von maximal 5°, bevorzugt maximal 2° zwischen jeweils benachbarten Streifen vorliegt.

Gemäß einer weiteren besonders bevorzugter Ausgestaltung kann vorgesehen sein, dass an der Rückseite des Trägers von diesem abragende Führungselemente hergestellt werden, bevorzugt, indem rückseitig des Trägers und insbesondere zumindest im Wesentlichen parallel zu einer Längskante des Trägers ein längliches Maskierungselement angeordnet wird, welches eine Mehrzahl von nebeneinanderliegenden, voneinander beabstandeten Ausnehmungen aufweist, deren Innenkontur jeweils der Außenkontur eines Führungselementes entspricht, wobei die Ausnehmungen bevorzugt jeweils an zwei gegenüberliegenden Seiten offen ausgebildet sind, und das Maskierungselement insbesondere derart auf dem Träger angeordnet wird, dass jeweils eine der offenen Seiten der Ausnehmungen dem Träger zugewandt ist, und die Ausnehmungen mit einem flüssigen Gießmaterial befüllt werden. Das Befüllen mit flüssigem Gießmaterial erfolgt zweckmäßiger Weise durch die andere, gegenüberliegende offene Seite der Ausnehmungen. Von dem Gießmaterial kann etwas durch die eine offene Seite der Ausnehmungen in den Träger eintreten, so dass nach Aushärtung des Gießmaterials mit dem Träger verbundene Führungselemente, in die jeweils ein Abschnitt des Trägers eingebettet ist, erhalten werden.

Der Begriff flüssig schließt auch zähflüssig mit ein. Das Material ist nicht fest und kann gegossen werden. Jede der Ausnehmungen bildet sozusagen eine an zwei gegenüberliegenden Seiten offene Gießform zur Herstellung eines Führungselements. Durch eine offene Seite kann flüssiges Gießmaterial eingefüllt werden und durch die gegenüberliegende offene Seite kann etwas von dem flüssigen Gießmaterial in den Träger eindringen, so dass im Anschluss an das Aushärten an dem Träger befestigte, mit diesem verbundene Führungselemente, in die jeweils ein Abschnitt des Trägers eingebettet ist, erhalten werden. Das Maskierungselement kann nach dem Aushärten entfernt werden, insbesondere, indem es nach oben abgehoben wird.

Ein weiterer Gegenstand der Erfindung ist die Verwendung eines erfindungsgemäßen Transportbandes in einer Fördereinrichtung oder in einer Kartonzuschnitt-Stapelmaschine. Es wird insbesondere derart verwendet, dass es in Endloskonfiguration Transportgut fördert.

Die Erfindung betrifft ferner eine Fördereinrichtung oder Kartonzuschnitt-Stapeleinrichtung, umfassend ein erfindungsgemäßes Transportband, wobei die Fördereinrichtung oder die Kartonzuschnitt-Stapeleinrichtung bevorzugt eine Rollenbahn oder sonstige Walzenanordnung aufweist und das Transportband die Rollenbahn bzw. sonstige Walzenanordnung in Endloskonfiguration umgreift.

In der Zeichnung ist die Erfindung anhand von Ausführungsbeispielen näher veranschaulicht. Es zeigen in rein schematischer Darstellung:
- Figur 1: ein erstes Ausführungsbeispiel eines erfindungsgemäßen Transportbandes in der Aufsicht
- Figur 2: einen Querschnitt durch das Transportband aus Figur 1;
- Figur 3: ein zweites Ausführungsbeispiel eines erfindungsgemäßen Transportbandes in der Aufsicht;
- Figur 4: den Träger des Transportbandes aus den Figuren 1 und 2 mit unmittelbar darauf angeordneter Maskierungsanordnung in Schnittdarstellung (oben) sowie die Schnittdarstellung gemäß Figur 2 (unten);
- Figur 5: den Träger eines weiteren Ausführungsbeispiels eines erfindungsgemäßen Transportbandes mit unmittelbar darauf angeordneter Maskierungsanordnung (oben) und korrespondierendem erfindungsgemäßen Transportband (unten) in Schnittdarstellung;
- Figur 6: den Träger eines weiteren Ausführungsbeispiels eines erfindungsgemäßen Transportbandes mit unmittelbar darauf angeordneter Maskierungsanordnung (oben) und korrespondierendem erfindungsgemäßen Transportband (unten) in Schnittdarstellung;
- Figur 7: zwei weitere Ausführungsbeispiele von Maskierungsstreifen mit Vertiefungen in Schnittdarstellung;
- Figur 8: eine auf einem Träger angerordnete Maskierungsanordnung mit einer Mehrzahl von Maskierungsstreifen in der Aufsicht;
- Figuren 9-11: drei weitere Ausführungsformen erfindungsgemäßer Transportbänder in Schnittdarstellung;
- Figuren 12-14: rein schematische Längsschnittdarstellungen des Nahtbereiches des in Figur 3 dargestellten Transportbandes;
- Figur 15: eine stark vereinfachte Darstellung einiger Komponenten einer erfindungsgemäßen Kartonzuschnitt-Stapeleinrichtung; und
- Figur 16: eine Frontalansicht auf das Transportband und die Kartonstapel-Scheibenwalze der Einrichtung aus Figur 15 in stark vereinfachter Darstellung.

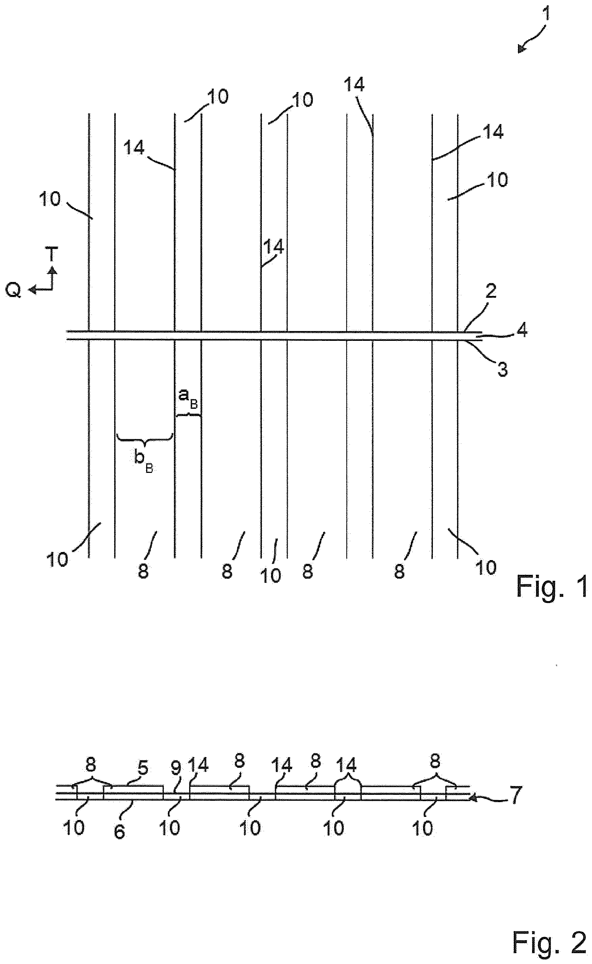

Die Figur 1 zeigt in stark vereinfachter, rein schematischer Darstellung eine Aufsicht auf einen Bereich, konkret den Nahtbereich eines ersten Ausführungsbeispiels eines erfindungsgemäßen Transportbandes 1 (auch als Fördergurt bezeichenbar).

Das Transportband 1 erstreckt sich in einer Transportrichtung T sowie in einer quer zur Transportrichtung verlaufenden Querrichtung Q. Es ist in der Figur 1 in einer Endloskonfiguration dargestellt, in welcher seine beiden Stirnkanten 2, 3 in Transportrichtung T aneinander liegen und durch eine Nahtverbindung 4 miteinander verbunden sind. In der Regel wird ein erfindungsgemäßes Band 1 zunächst als offenendiges Band hergestellt und in seiner Montageposition, beispielsweise in einer Förder- oder Kartonzuschnitt-Stapeleinrichtung, in Endloskonfiguration gebracht werden, indem die Stirnkanten 2, 3 aneinander gelegt und eine Verbindung hergestellt wird. Die Figur 2 zeigt - ebenfalls in stark vereinfachter, schematischer Darstellung - einen korrespondierenden Querschnitt durch das Band 1 aus Figur 1 außerhalb der Nahtverbindung 4.

Das Band zeichnet sich durch eine Ausdehnung in Transportrichtung T von 2,13 m aus und eine Ausdehnung in Querrichtung von 2,70 m, wobei diese Ausmaße beispielhaft zu verstehen sind. Alternativ seien - ebenfalls beispielshaft - eine Ausdehnung in Transportrichtung T von 8,29 m und eine Ausdehnung in Querrichtung von 3,00 m genannt. Die Ausdehnung in Querrichtung Q ist in der Figur 1 mit dem Bezugszeichen b_{B} versehen.

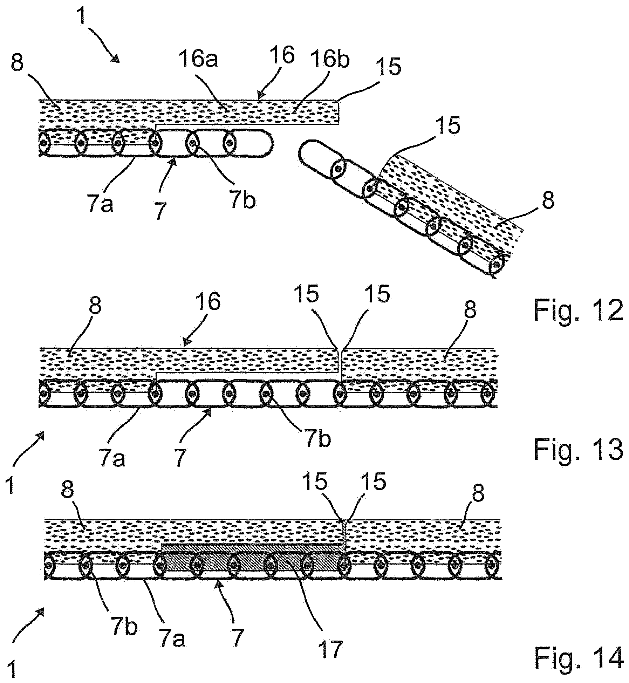

Das erfindungsgemäße Band 1 hat eine für die Auflage von Transportgut bestimmte Vorderseite 5 sowie eine von der Vorderseite 5 abgewandte Rückseite 6 (siehe Figur 2), die im montierten Zustand einer nicht dargestellten Rollenbahn oder sonstigen Walzenanordnung einer Kartonstapel-Zuschnitt- bzw. Fördereinrichtung zugewandt ist. Es umfasst ferner einen Träger 7, bei dem es sich vorliegend um ein Spiralgliederband einer Dicke von 1,7 mm handelt. Der Träger 7 ist luft- und wasserdurchlässig. Es sei angemerkt, dass der hinlänglich vorbekannte Aufbau eines Spiralgliederbandes auch den Figuren 12 bis 14 entnommen werden kann, welche Darstellungen eines weiteren Ausführungsbeispiels eines erfindungsgemäßen Transportbandes im Schnitt in Transportrichtung T zeigen. Hier ist die Vielzahl von Wendeln 7a und Steckdrähten 7b des Spiralgliederbandes zu erkennen. Die Windungen der Wendeln 7a greifen reißverschlussartig ineinander, und die Steckdrähte 7b sind in Kanäle eingeschoben, die durch ineinandergreifende Windungen benachbarter Wendeln 7a definiert werden.

Das Band 1 weist darüber hinaus eine Mehrzahl von beabstandet zueinander angeordneten Beschichtungsstreifen 8 aus einem Beschichtungsmaterial auf, die mit dem Träger 7 verbunden sind, indem der Träger 7 jeweils abschnittsweise in die Beschichtungsstreifen 8 eingebettet ist. Konkret ist jeweils ein sich unterhalb des jeweiligen Beschichtungsstreifens 8 erstreckender Bereich/Abschnitt des Trägers 7 in den darüber liegenden Beschichtungsstreifen 8 teilweise eingebettet. Der Träger 7 ist - bzw. dessen Abschnitte/Bereiche sind -, wie man insbesondere der Schnittdarstellung gemäß Figur 2 entnehmen kann, derart in den jeweiligen Beschichtungsstreifen 8 eingebettet, dass er/sie sich nicht bis zu den Vorderseiten der Beschichtungsstreifen 8 erstreckt/erstrecken. Vielmehr stehen die Beschichtungsstreifen 8 über die Vorderseite 9 des Trägers 7 vor, wie die Schnittdarstellung zeigt.

Die Beschichtungsstreifen 8 erstrecken sich parallel zueinander sowie parallel zu den sich in Transportrichtung T erstreckenden Längskanten des Bandes 1. Die Vorderseiten der Beschichtungsstreifen 8 definieren bzw. bilden zusammen die Vorderseite 5 des Transportbandes 1 und die Rückseite des Trägers 7 definiert bzw. bildet, da der Träger 7 nicht über seine gesamte Dicke sondern nur teilweise in die Beschichtungsstreifen 8 eingebettet ist, die Rückseite 6 des Bandes 1.

Die Beschichtungsstreifen 8 bestehen bei dem dargestellten Beispiel aus einem Beschichtungsmaterial, welches aus einem reaktiven System zur Herstellung einer Elastomerbeschichtung, vorliegend einem 2-Komponenten-System erhalten wurde, das sich durch eine Topfzeit von weniger als 30 Sekunden, bevorzugt weniger als 15 Sekunden, besonders bevorzugt weniger als 10 Sekunden auszeichnet.

Die Beschichtungsstreifen 8 bestehen konkret aus Polyharnstoff. Polyharnstoff-Polymere werden in der Regel über ein 2-Komponenten-System erzeugt, wobei die eine Komponente, insbesondere ein isocyanathaltiges Prepolymer, mit einem mehrfunktionellen Amin oder Amingemisch als weitere Komponente zu Polyharnstoff reagiert. Vorliegend ist als 2-Komponenten-System zum Erhalt des Beschichtungsmaterials isocyanhaltiges Prepolymer, das mit Polyamin zu Polyharnstoff reagiert, verwendet worden. Polyharnstoff zeichnet sich bei einer Verarbeitungstemperatur im Bereich von 60 bis 90 °C durch eine Viskosität von weniger als 1.000 mPa s aus.

Die Beschichtungsstreifen 8 zeichnen sich vorliegend durch eine Härte von 60 Shore A aus.

Die Beschichtungsstreifen 8 zeichnen sich ferner durch einen im Wesentlichen viereckigen Querschnitt aus. Sie weisen in der Aufsicht auf die Vorderseite 5 des Bandes 1 in Nicht-Endloskonfiguration betrachtet eine zumindest im Wesentlichen rechteckige Kontur auf.

Die Beschichtungsstreifen 8 haben konkret eine Breite von 100 mm und eine Länge, welche der Ausdehnung des Bandes 1 in Transportrichtung T entspricht, also bei dem Beispiel aus Figur 1 2,13 m. Die Beschichtungsstreifen 8 haben eine Ausdehnung in Transportrichtung T des Bandes 1, welche mehr als das Zwanzigfache von deren Ausdehnung in Querrichtung Q beträgt. Benachbarte Beschichtungsstreifen 8 sind in Querrichtung Q jeweils um 40 mm voneinander beabstandet. Der Abstand zwischen zwei benachbarten Streifen 8 ist in der Figur 1 mit a_{B} bezeichnet.

Die Beschichtungsstreifen 8 zeichnen sich alle durch die gleiche Form und zumindest im Wesentlichen gleiche Dimensionierung aus.

Sie weisen ferner über ihre gesamte Ausdehnung eine zumindest im Wesentlichen gleichbleibende Schichtdicke von vorliegend 3 bis 4 mm aus. Die über die Vorderseite des Trägers 7 vorstehende Schichtdicke der Beschichtungsstreifen 8 beträgt vorliegend 3 mm, wobei dies wiederum rein beispielhaft zu verstehen ist.

Neben den Beschichtungsstreifen 8 weist der erfindungsgemäße Träger 7 ebenfalls streifenförmige unbeschichtete Bereiche 10 auf, in denen er frei von jeglichem Beschichtungsmaterial ist. Darunter, dass der Träger 7 bereichs- bzw. abschnittsweise frei von Beschichtungsmaterial ist, ist vorliegend zu verstehen, dass er in den betroffenen Bereichen/Abschnitten, also den unbeschichteten Bereichen 10 an keiner seiner beiden Seiten und auch nicht in seinem Inneren Beschichtungsmaterial aufweist, also über seine gesamte Dicke frei von einer Beschichtung bzw. frei von Beschichtungsmaterial ist.

Bei dem dargestellten Beispiel wechseln sich Beschichtungsstreifen 8 und streifenförmige unbeschichtete Bereiche 10 ab. Es liegt jeweils zwischen zwei benachbarten Beschichtungstreifen 8 ein ebenfalls streifenförmiger unbeschichteter Bereich 10. Beschichtungsmaterial befindet sich ausschließlich im Bereich der Beschichtungsstreifen 8. Zwischen diesen ist (über die gesamte Dicke des Trägers 7) kein Beschichtungsmaterial vorhanden.

Die Ausdehnung der streifenförmigen unbeschichteten Bereiche in Querrichtung Q entspricht dem Abstand a_{B}, beträgt also 40 mm. Deren Länge entspricht der Länge der Beschichtungsstreifen 8 und somit der Ausdehnung des Bandes 1 in Transportrichtung T. Sie weisen - in Analogie zu den Beschichtungsstreifen 8 - in der Aufsicht auf die Vorderseite 5 des Bandes 1 in Nicht-Endloskonfiguration betrachtet eine zumindest im Wesentlichen rechteckige Kontur auf.

Die streifenförmigen unbeschichteten Bereiche 10 zeichnen sich alle durch die gleiche Form und zumindest im Wesentlichen gleiche Dimensionierung aus.

Das Band 1 wird somit aus einem ausschließlich selektiv, konkret nur im Bereich der Beschichtungsstreifen 8 beschichteten Träger 7 gebildet.

Durch die Beschichtungsstreifen 8, deren Vorderseiten (zusammen) die für die Auflage von Transportgut bestimmte Vorderseite 5 des Bandes 1 bilden bzw. definieren, können einerseits gute Förderungseigenschaften erhalten werden, etwa ein optimaler Reibwert. Gleichzeitig kann das Band 1, da es erfindungsgemäß auch Bereiche 10 aufweist, die frei von Beschichtungsmaterial sind, sich auch durch Eigenschaften des Trägers 7 auszeichnen. Das Band 1 mit dem luftdurchlässigen Träger 7 ist insgesamt betrachtet luftdurchlässig, auch wenn dies nicht für die Beschichtungsstreifen 8 gilt. Es liegt eine ideale Kombination von Eigenschaften vor.

Das Transportband 1 aus Figur 1 ist durch folgendes Verfahren hergestellt worden, welches ein Ausführungsbeispiel eines erfindungsgemäßen Verfahrens darstellt.

In einem ersten Schritt wurde der Träger 7 bereitgestellt, vorliegend in offenendigem Zustand, etwa flach auf einem Untergrund aufliegend. Es sei angemerkt, dass auch nicht ausgeschlossen ist, dass ein Träger 7 in Endloskonfiguration bereitgestellt wird. Anschließend wurden vorderseitig des Trägers 7 die mehreren Beschichtungsstreifen 8 aus dem Beschichtungsmaterial hergestellt, indem vorderseitig des und unmittelbar auf dem Träger 7 eine den Träger 7 teilweise maskierende Maskierungsanordnung 11 angeordnet wurde, die mehrere längliche Maskierungsstreifen 12 umfasst, und Beschichtungsmaterial auf den durch die Maskierungsanordnung 11 teilweise verdeckten Träger 7 im flüssigen Zustand durch ein Sprüh-Verfahren aufgebracht wurde. Anschließend, konkret nach dem vollständigen Aushärten des Beschichtungsmaterials wurde die Maskierungsanordnung 11 entfernt.

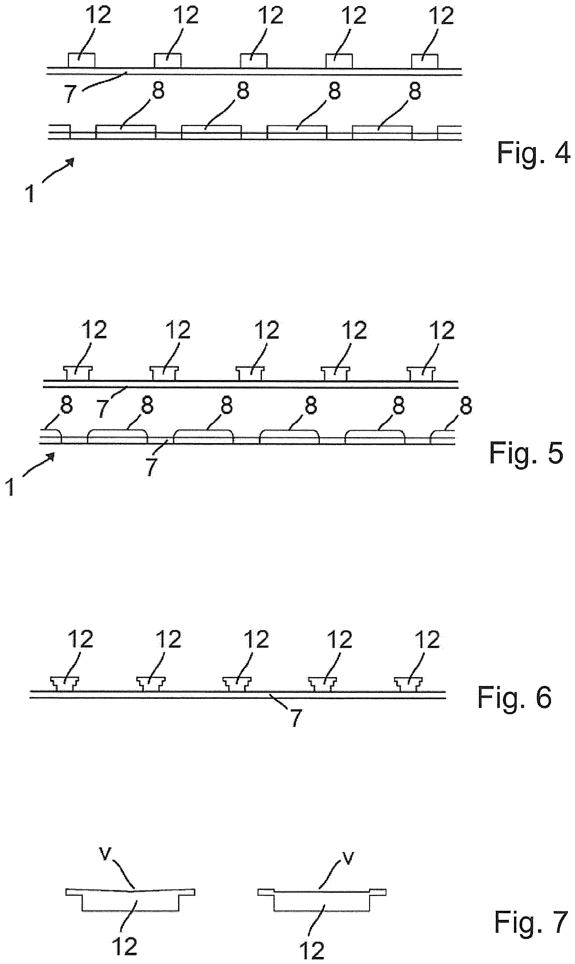

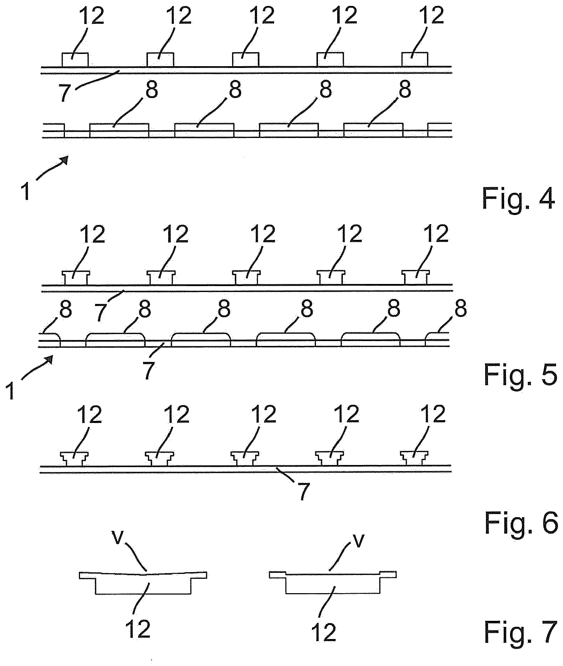

Die Figur 4 zeigt oben den Träger 7 mit darauf angeordneter Maskierungsanordnung 11 mit den mehreren Maskierungsstreifen 12 im Querschnitt.

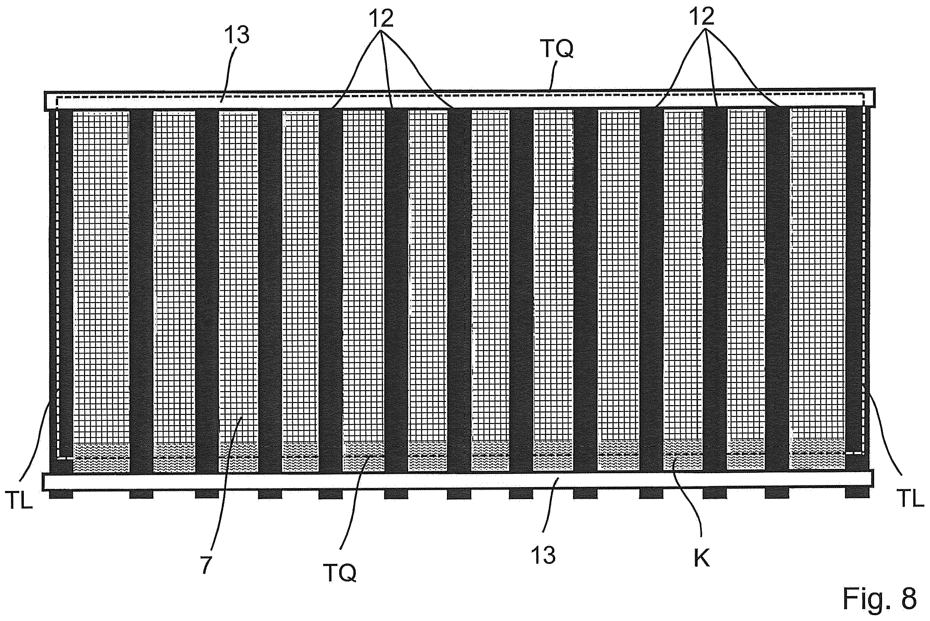

Die Figur 8 zeigt eine Aufsicht auf die Maskierungsanordnung 11 mit darunter befindlichem Träger 7 in rein schematischer Darstellung. Die Längs- und Querkanten TL, TQ des Trägers 7 sind, da sie in der Figur durch die Maskierung verdeckt sind, in gestrichelter Linie dargestellt, so dass erkennbar ist, bis wo genau sich der Träger 7 unter den Elementen der Maskierungsanordnung 11 erstreckt.

Es wurde eine Maskierungsanordnung 11 verwendet, welche dreizehn parallele Maskierungsstreifen 12 zumindest im Wesentlichen gleicher Länge umfasst, deren auf der einen Seite liegenden Enden und deren auf der anderen Seite liegenden Enden jeweils über einen quer zu den Maskierungsstreifen 12 verlaufenden Naht-Maskierungsstreifen 13 miteinander verbunden sind. Über die Naht-Maskierungsstreifen 13, an denen jeweils ein Endbereich jedes Maskierungsstreifens 12 fixiert ist, können die Maskierungsstreifen 12 während des Herstellungsprozesses auf einfache Weise in gewünschter Position gehalten werden. Die Maskierungsstreifen zeichnen sich jeweils durch eine Breite von 40 mm aus.

Die Maskierungsanordnung 11 umfasst vorliegend ferner einen Klebestreifen K, der sich parallel zu den Naht-Maskierungsstreifen 13 erstreck, einen Endbereich des Trägers 7 verdeckt und unter den Maskierungsstreifen 12 verläuft. Dieser Klebestreifen K dient dem Erhaltvon Nahtklappen, worauf weiter unten noch näher eingegangen wird.

Das Sprüh-Verfahren hat sich als besonders geeignet zum Erhalt der Beschichtungsstreifen 8 erwiesen. Ein Sprühauftrag kann einerseits vergleichsweise zügig durchgeführt werden. Auch ist es möglich, eine auch über größere Flächen gleichmäßige Schichtdicke zu erhalten. Im flüssigen Zustand aufgesprühtes Beschichtungsmaterial kann ferner in den Träger eindringen, so dass nach dem Aushärten des Materials Beschichtungsstreifen erhalten werden, in welche der Träger zumindest teilweise bzw. abschnittsweise eingebettet ist, so dass die Beschichtungsstreifen fest mit dem Träger verbunden sind. Dafür ist nur ein Herstellungsschritt erforderlich. Werden die Streifen hingegen erst hergestellt und dann an dem Träger befestigt, etwa aufgeklebt oder dergleichen, ist der Aufwand höher und die Verankerung im Träger weniger ausgeprägt.

Es hat sich als ganz besonders geeignet erwiesen, wenn die beiden näher der oder an der Vorderseite 5 des Bandes 1 liegenden Längskanten 14 und/oder Querkanten 15 der Beschichtungsstreifen 8 abgerundet sind. Dann liegt eine geringere Stoßanfälligkeit vor. Es kann vermieden werden, dass Transportgut an scharfen Kanten hängen bleibt oder sich verkeilt. Eine Beschädigung von Transportgut und/oder Beschichtungsstreifen 8 kann zuverlässig vermieden werden.

Im Bereich der abgerundeten Längskanten 14 gilt dann, dass die Ausdehnung der Beschichtungsstreifen 8 in Querrichtung in Richtung der Vorderseite 5 des Bandes 1 hin abnimmt. Mit anderen Worten nimmt die Breite der Beschichtungstreifen 8 (Ausdehnung in Querrichtung) in Richtung der Vorderseite 5 hin (in Richtung der Dicke der Streifen 8) ab. Die Breite verjüngt sich praktisch in Richtung der Vorderseite 5 des Bandes 1.

Ausführungsbeispiele entsprechend ausgestalteter erfindungsgemäßer Transportbänder 1 sind in den Figuren 5 und 9 bis 11 zu sehen, wiederum in rein schematischer Darstellung. Dabei zeigen die Figuren 5 sowie 9 bis 11 Schnitte in Querrichtung Q des jeweiligen Bandes 1 und die Figuren 12 bis 14 Schnitte in Transportrichtung T des jeweiligen Bandes 1 im Bereich eines Beschichtungsstreifens 8.

Es sei angemerkt, dass das in der Figur 5 dargestellte Ausführungsbeispiel von demjenigen aus Figur 1 allein dadurch abweicht, dass die vorderseitigen Längs- und Querkanten 14, 15 abgerundet sind. In allen anderen Aspekten stimmt dieses mit dem aus Figur 1 überein.

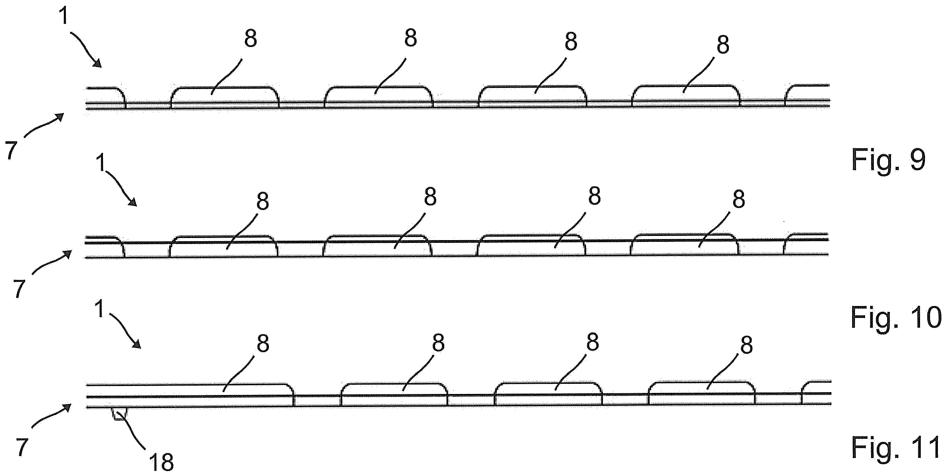

Die Ausführungsbeispiele gemäß den Figuren 9 bis 11 unterscheiden sich zusätzlich dadurch, dass die Träger 7 verschiedene Dicken aufweisen und die Beschichtungsstreifen 8 verschieden weit über die Vorderseiten der Träger 7 vorstehen. Konkret gilt für Figur 9, dass die Dicke des Trägers 7 1,7 mm beträgt, die Dicke der Beschichtungstreifen 8 4,5 mm und die Beschichtungsstreifen 8 3,5 mm über die Vorderseite des Trägers 7 vorstehen. Für Figur 10 gilt, dass die Dicke des Trägers 7 3 mm beträgt, die Dicke der Beschichtungstreifen 8 4 mm und die Beschichtungsstreifen 8 1 mm über die Vorderseite des Trägers 7 vorstehen. Für Figur 11 gilt, dass die Dicke des Trägers 7 2,5 mm beträgt, die Dicke der Beschichtungstreifen 8 4 mm und die Beschichtungsstreifen 8 2 mm über die Vorderseite des Trägers 7 vorstehen.

Die Anmelderin hat festgestellt, dass Beschichtungsstreifen 8 solcher Ausgestaltung auf besonders einfache Weise erhalten werden können, wenn eine Maskierungsanordnung 11 verwendet wird, welche Maskierungsstreifen 12 umfasst, deren Breite mit zunehmendem Abstand von der Vorderseite des Trägers 7 zunimmt. Bevorzugt weisen die Maskierungsstreifen 12 zwei oder mehr übereinanderliegende Streifenelemente auf, die sich durch verschiedene Breiten auszeichnen, wobei besonders bevorzugt das Streifenelement geringster Breite der Vorderseite des Trägers 7 am nächsten liegend und das Streifenelement größter Breite von der Vorderseite am weitesten entfernt angeordnet ist bzw. wird, wenn die Maskierungsanordnung11 vor dem Träger 7 positioniert ist bzw. wird.

Entsprechende Maskierungsstreifen 12 sind beispielhaft in der Figur 5 oben sowie der Figur 6 im Querschnitt dargestellt. Wie man erkennt, nimmt die Breite stufenweise zu.

Bei beiden Ausführungsbeispielen umfasst jeder der Maskierungsstreifen 12 mehrere übereinanderliegende Streifenelemente, die jeweils eine konstante Breite in Richtung der Vorderseite haben. Bei dem Ausführungsbeispiel gemäß Figur 5 sind es zwei Streifenelemente und es liegt eine stufenweise Zunahme bzw. eine Stufe vor. Man hat praktisch einen Maskierungsstreifen, der ein unmittelbar auf dem Träger 7 liegendes Podest bzw. Grundstreifenelement bildet und darüber ein weiteres Streifenelement größerer Breite, das ein vorstehendes "Dach" bildet. Bei dem Beispiel gemäß Figur 6 liegen zwei Stufen vor, was über drei übereinanderliegende Streifenelemente verschiedener Breite realisiert ist. Diese Geometrie kann auch aus einem einzigen Element durch geeignete Bearbeitung erzeugt werden.

Es kann sein, dass die Maskierungsstreifen 12 an ihrer vom Träger 7 abgewandten Oberseite wenigstens eine Vertiefung V aufweisen, was beispielhaft in der Figur 7 - rein schematisch - dargestellt ist. Die Vertiefung V bzw. Einsenkung kann beispielsweise einen konkav nach innen, in Richtung des Trägers 7 gewölbten Boden aufweisen (Figur 7 links) oder sich durch einen rechteckigen Querschnitt auszeichnen (Figur 7 rechts). Bei dem dargestellten Ausführungsbeispiel wird der Boden der Vertiefung durch die (komplette) Oberseite des Maskierungsstreifens 12 gebildet, welche konkav nach innen gewölbt ist. Es kann genau eine Vertiefung V vorgesehen sein, die s durch eine sich in Längsrichtung des jeweiligen Maskierungsstreifens 12 erstreckende Rille gegeben ist, wie es bei den in Figur 7 dargestellten Beispielen der Fall ist.

Es hat sich weiterhin als besonders vorteilhaft erwiesen, wenn das erfindungsgemäße Transportband 1, wie in den Figuren 12 bis 14 dargestellt, Nahtklappen 16 aufweist.

Bei dem dargestellten Ausführungsbeispiel ist eine Mehrzahl von Nahtklappen 16 in dem einen der beiden Endbereiche des Bandes1, die in Endloskonfiguration aneinanderzulegen sind, vorgesehen. Konkret bildet ein Endbereich jedes Beschichtungsstreifens 8 eine Nahtklappe 16. Die Figuren 12 bis 14 zeigen einen Längsschnitt durch das Band 1 im Bereich einer der Nahtklappen. Die weiteren Beschichtungsstreifen 8 sind im Längsschnitt betrachtet gleichermaßen ausgestaltet.

Jede der Nahtklappen 16 umfasst einen Abschnitt 16a des jeweiligen Beschichtungsstreifens 8, in dem der Träger 7 nicht in den Beschichtungsstreifen 8 eingebettet ist. In diesem Bereich 16a der jeweiligen Nahtklappe 16 ist der jeweilige Beschichtungsstreifen 8, wenn das Transportband 1 sich noch in einem offenendigen, also nicht endlosen Zustand befindet (vgl. Figur 12), dann nicht mit dem sich darunter erstreckenden Trägerabschnitt verbunden sondern bildet (jeweils) eine Klappe, die, wenn der Träger 7 durch Verbinden der beiden Enden in eine Endloskonfiguration gebracht wurde, die Verbindungsstelle übergreifen kann, so dass im Bereich des Beschichtungsstreifens/der Beschichtungsstreifen 8 eine geschlossene und ebene Oberfläche des Transportbandes 1 erhalten wird (siehe Figur 14).

Die Abschnitte 16a werden bzw. wurden erhalten, indem vor dem Aufsprühen von Beschichtungsmaterial ein weiterer, sich quer zur Transportrichtung T erstreckender Maskierungsstreifen, konkret der Klebestreifen K mit einer trennend ausgerüsteten Oberseite und einer Dicke von 0,1 bis 0,5 mm vor bzw. unmittelbar auf dem Träger 7 in dem betroffenen Endbereich angeordnet wurde. Der quer verlaufende Maskierungsstreifen wird/wurde dabei unterhalb der Maskierungsstreifen 12 zum Erhalt der Beschichtungsstreifen vorgesehen.

Jeder Beschichtungsstreifen 8/jede Nahtklappe 16 umfasst bei dem dargestellten Ausführungsbeispiel ferner einen Abschnitt 16b, der sich an einer Seite des Trägers 7 bis über den Träger 7 hinaus erstreckt. Dass die Beschichtungsstreifen 8 an einer Seite überstehen, kann auch gut der Aufsicht auf das Band 1 gemäß Figur 3 entnommen werden. Die Abschnitte 16b werden/wurden erhalten, indem während des Herstellungsprozesses Beschichtungsmaterial auch noch in einem sich an das Ende des Trägers 7 anschließenden Bereich aufgebaut wurde.

An der anderen Seite des Trägers 7 in Transportrichtung hingegen enden die Beschichtungsstreifen 8 bereits in einem vorgegebenen Abstand von etwa zwei bis sechs Wendeln 7a vor dem anderen Ende des Trägers 7, was man ebenfalls besonders gut der Aufsicht gemäß Figur 3 entnehmen kann. So steht an der anderen Seite Raum zur Verfügung, in welchem die Nahtklappen 16 bzw. deren Abschnitte 16b positioniert werden können, bzw. in dem die Nahtklappen 16 bzw. Abschnitte 16b unmittelbar auf den Träger 7 aufgelegt/geklappt werden können.

Wie man sieht, ist die Dicke der Beschichtungsstreifen 8 im Bereich der Nahtklappen 16 geringer als die Dicke im verbleibenden Bereich der Streifen 8. Hierdurch wird es möglich, in Endloskonfiguration eine geschlossene, ebene Oberfläche zu erhalten, was die Figuren 12 bis 14 gut veranschaulichen.

Die Ausgestaltung ist ferner derart, dass die freien Kanten bzw. Stirnseiten der beiden Endbereiche des Bandes 1 in Endloskonfiguration des Bandes 1 (vgl. Figur 14) unter Bildung eines Spaltes voneinander geringfügig beabstandet sind.

Zum Erhalt der Endloskonfiguration werden, wenn das Band sich in der Montageposition in einer Maschine befindet, zunächst die beiden freien Enden des Trägers 7 verbunden. Dies kann bei einem Spiralgliederband auf besonders einfache Weise mittels eines Steckdrahtes 7b erreicht werden (vgl. die Figuren 12 und 13). Da sich die Beschichtungsstreifen 8 an dem einen Ende nicht bis zum Ende des Trägers 7 erstrecken und im Bereich 16a der Nahtklappen 16 die Beschichtungsstreifen 8 nicht in den Träger 16 eingebettet sind, kann die Verbindung des Trägers 7 leicht hergestellt werden. Dann können die Nahtklappen 16 mit dem Träger 7 verklebt werden. Hierzu wird Klebstoff 17 unterhalb der Nahtklappen 16 sowie im Bereich des Spaltes zwischen den Stirnkanten vorgesehen, wie in Figur 14 zu erkennen.

Es hat sich weiterhin als besonders vorteilig erwiesen, wenn sich das erfindungsgemäße Transportband 1 dadurch auszeichnet, dass an der Rückseite des Trägers 7 von diesem abragende Führungselemente 18 hergestellt werden bzw. vorhanden sind (siehe Figur 11).

Die Führungselemente 18 können, wenn das erfindungsgemäße Band 1 in einer Fördereinrichtung oder in einer Kartonzuschnitt-Stapeleinrichtung montiert ist und umläuft, in eine oder mehrere in der Einrichtung, insbesondere in Walzen bzw. Rollen vorgesehene Führungsnuten eingreifen, so dass das Band 1 in quer zur Transportrichtung T verlaufender Richtung in einer gewünschten Position bzw. Lage gehalten werden kann.

Die an/von der Rückseite des Trägers 7 abragenden Führungselemente 18 können erhalten werden bzw. wurden bei dem dargestellten Ausführungsbeispiel erhalten, indem rückseitig des Trägers 7 und zumindest im Wesentlichen parallel zu dessen Längskanten ein streifenförmiges Maskierungselement angeordnet wird/wurde, welches eine Mehrzahl von nebeneinanderliegenden, voneinander beabstandeten Ausnehmungen aufweist, deren Innenkontur jeweils der Außenkontur eines herzustellenden Führungselementes 18 entspricht. Die Ausnehmungen sind jeweils an zwei gegenüberliegenden Seiten offen ausgebildet, und das Maskierungselement wird/wurde derart auf dem Träger 7 angeordnet, dass jeweils eine der offenen Seiten der Ausnehmungen dem Träger 7 zugewandt ist/war. Die Ausnehmungen werden/wurden mit einem flüssigen, ggf. zähflüssigen Gießmaterial befüllt, wobei von dem Gießmaterial etwas durch die dem Träger zugewandte offene Seite der Ausnehmungen in den Träger 7 eintritt/eintrat, so dass nach Aushärtung des Gießmaterials mit dem Träger 7 verbundene Führungselemente 18, in die jeweils ein Abschnitt des Trägers 7 eingebettet ist, erhalten werden/wurden.

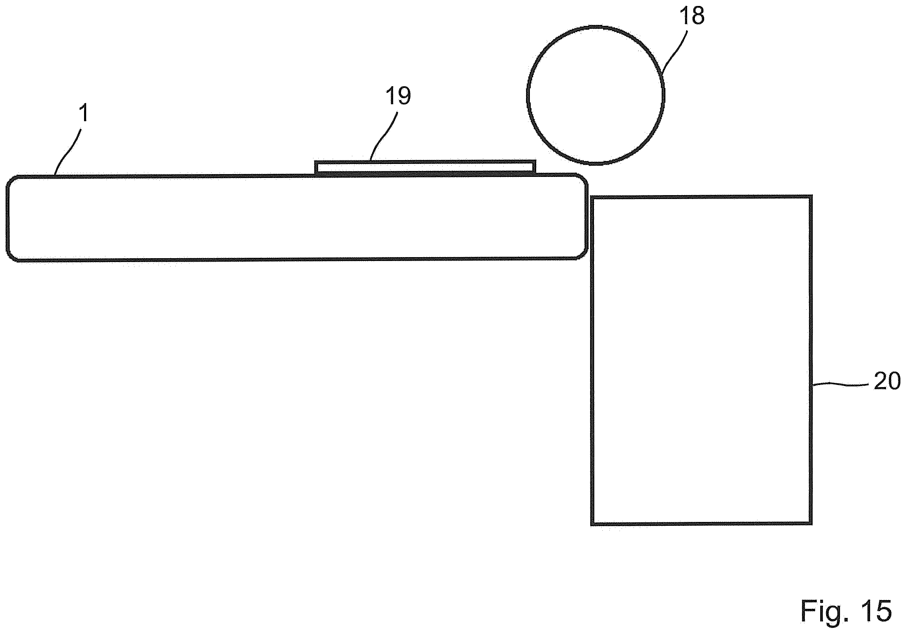

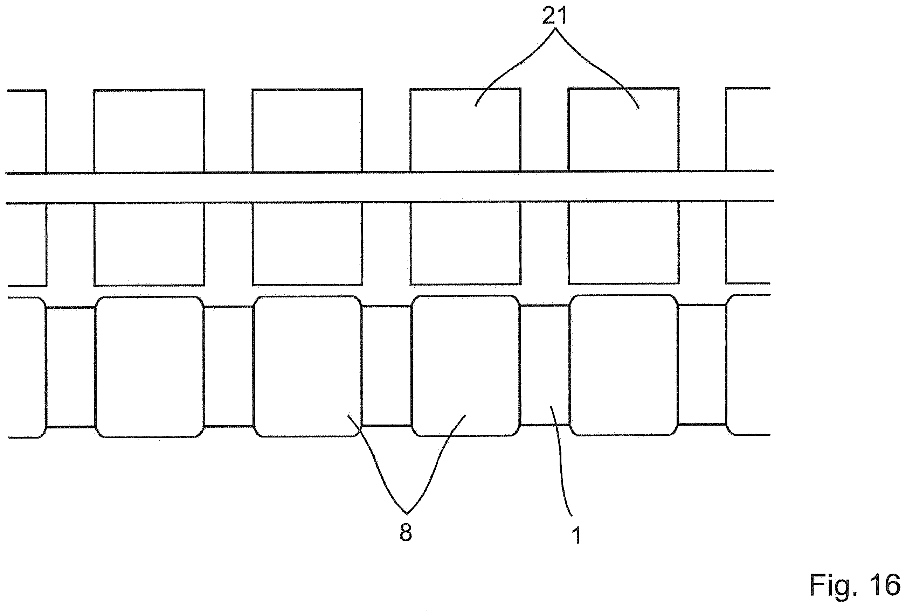

Die Figuren 15 und 16 zeigen beispielhaft ein erfindungsgemäßes Transportband 1 im in einer Kartonzuschnitt-Stapelmaschine montierten Zustand. Es sei betont, dass die Figuren stark vereinfachte, rein schematische Darstellungen sind, in denen neben dem Band 1 nur einige Komponenten der Maschine angedeutet sind. In der Figur 15 sind - in schematischer Längsschnittdarstellung - das Band 1 in Endloskonfiguration, wenn es um eine nicht weiter dargestellte Rollenbahn der Maschine gelegt ist, eine Kartonstapel-Scheibenwalze 18 am Ende des Band- bzw. Gurt-Obertrums, ein mittels des Bandes 1 in Richtung der Walze 18 beförderter Stapel 19 mit einer definierten Anzahl von übereinanderliegenden Kartonzuschnitten sowie ein bereits abgetafelter Kartonstapel 20, der sich auf einer nicht dargestellten höhenverfahrbaren Plattform befindet, abgebildet. Mittels des Bandes 1 in Figur 15 nach rechts, in Richtung der Walze 18 transportierte Kartonzuschnitte 19 werden am Ende des Band- bzw. Gurt-Obertrums von der Kartonstapel-Scheibenwalze 18 erfasst, zwischen Transportband 1 und Scheibenwalze 18 eingeklemmt und auf der höhenverfahrbaren Plattform zu einem wachsenden Kartonstapel 20 abgetafelt.

Die Figur 16 zeigt eine Ansicht von der in Figur 15 rechten Seite auf das Band 1 und die Walze 18 (ohne Kartonstapel 20). Wie man sieht, ist die Anordnung derart getroffen, dass die Walzenscheiben 21 der Kartonstapel-Scheibenwalze 18 jeweils einem Beschichtungsstreifen 8 des erfindungsgemäßen Bandes 1 gegenüberliegen, so dass sie mit diesen zur Förderung bzw. zum Abtafeln der Kartonzuschnitte zusammenwirken können.

Die in den Figuren 15 und 16 stark vereinfacht dargestellte Maschine ist ein Ausführungsbeispiel einer erfindungsgemäßen Kartonzuschnitt-Stapeleinrichtung.

## Patentansprüche

1. Transportband (1), insbesondere zur Verwendung als Endlosband in einer Fördereinrichtung oder in einer Kartonzuschnitt-Stapeleinrichtung, das sich in einer Transportrichtung (T) und einer quer zu der Transportrichtung (T) verlaufenden Querrichtung (Q) erstreckt und eine für die Auflage von Transportgut bestimmte Vorderseite (5) und eine von der Vorderseite (5) abgewandte Rückseite (6) aufweist, wobei das Transportband (1) einen Träger (7) und eine Mehrzahl von beabstandet zueinander angeordneten, aus einem Beschichtungsmaterial bestehenden Beschichtungsstreifen (8) umfasst, wobei der Träger (7) mit den Beschichtungsstreifen (8) verbunden, insbesondere in die Beschichtungsstreifen (8) zumindest teilweise eingebettet ist, wobei es sich bei dem Träger (7) um ein Spiralgliederband handelt, **dadurch gekennzeichnet, dass** der Träger (7) Bereiche (10) aufweist, in denen er frei von Beschichtungsmaterial ist, wobei der Träger (7) in diesen Bereichen (10) an keiner seiner beiden Seiten und auch nicht in seinem Inneren Beschichtungsmaterial aufweist.

2. Transportband (1) nach Anspruch 1, **dadurch gekennzeichnet, dass** die Beschichtungsstreifen (8) aus einem wenigstens ein Polymer, insbesondere Polyharnstoff und/oder Polyurethan umfassenden oder daraus bestehenden Beschichtungsmaterial hergestellt sind, und/oder
dass das Beschichtungsmaterial der Beschichtungsstreifen (8) ein solches ist, welches aus einem reaktiven System zur Herstellung einer Elastomerbeschichtung, bevorzugt einem Mehrkomponentensystem mit zwei oder mehr Komponenten hergestellt wurde, das sich insbesondere durch eine Topfzeit von weniger als 30 Sekunden, bevorzugt weniger als 15 Sekunden, besonders bevorzugt weniger als 10 Sekunden auszeichnet,
und/oder dass das Beschichtungsmaterial der Beschichtungsstreifen (8) ein solches ist, das sich durch eine Viskosität von weniger als 3000 mPa s, bevorzugt weniger als 1000 mPa s, bei einer im Bereich von 20°C bis 120°C, bevorzugt 60°C bis 90°C, liegenden Verarbeitungstemperatur auszeichnet, und/oder dass sich die Beschichtungsstreifen (8) durch eine Härte im Bereich von 65 Shore A bis 65 Shore D auszeichnen, und/oder dass die Beschichtungsstreifen (8) luftundurchlässig sind.

3. Transportband (1) nach einem der vorhergehenden Ansprüche, **dadurch gekennzeichnet, dass** die Beschichtungsstreifen (8) erhalten wurden, indem das Beschichtungsmaterial auf den Träger (7) durch ein Sprüh-Verfahren aufgebracht wurde, wobei die Beschichtungsstreifen (8) bevorzugt hergestellt wurden, indem vorderseitig in einem vorgegebenen Abstand von insbesondere 1 bis 10 mm vor oder ohne Abstand unmittelbar auf dem Träger (7) eine den Träger (7) teilweise maskierende, Maskierungsstreifen (12) umfassende Maskierungsanordnung (11) angeordnet und das Beschichtungsmaterial bzw. miteinander zu dem Beschichtungsmaterial reagierende Ausgangsstoffe auf den durch die Maskierungsanordnung (11) teilweise verdeckten Träger (7) insbesondere durch ein Sprüh-Verfahren aufgebracht wurde bzw. werden.

4. Transportband (1) nach einem der vorhergehenden Ansprüche, **dadurch gekennzeichnet, dass** der Träger (7) derart rückseitig in die Beschichtungsstreifen (8) eingebettet ist, dass er sich nicht bis zu den Vorderseiten der Beschichtungsstreifen (8) erstreckt,
und/oder dass der Träger (7) luftdurchlässig ist,
und/oder dass die Vorderseiten der Beschichtungsstreifen (8) die Vorderseite (5) des Transportbandes (1) bilden,
und/oder dass die Rückseite des Trägers (7) die Rückseite (6) des Transportbandes (1) bildet.

5. Transportband (1) nach einem der vorherigen Ansprüche, **dadurch gekennzeichnet, dass** die Beschichtungsstreifen (8) nebeneinanderliegend angeordnet sind, und sich bevorzugt Beschichtungsstreifen (8) und unbeschichtete Bereiche (10), in denen der Träger (7) frei von Beschichtungsmaterial ist, abwechseln,
und/oder dass die Ausdehnung der Beschichtungsstreifen (8) in Querrichtung (Q) in Richtung der Vorderseite (5) des Bandes (1) zumindest über einen Teil der Ausdehnung der Beschichtungsstreifen (8) in dieser Richtung abnimmt oder zunimmt,
und/oder dass sich die Beschichtungsstreifen (8) durch einen im Wesentlichen viereckigen Querschnitt auszeichnen,
und/oder zumindest zwei Längskanten (14) und/oder zumindest zwei Querkanten (15) bevorzugt jedes Beschichtungsstreifens (8), bevorzugt die beiden näher der oder an der Vorderseite (5) liegenden Längskanten (14) und/oder Querkanten (15) insbesondere jedes Beschichtungsstreifens (8) abgerundet sind,
und/oder dass sich die Beschichtungsstreifen (8) in der Aufsicht auf die Vorderseite (5) des Bandes (1) in Nicht-Endloskonfiguration betrachtet durch eine zumindest im Wesentlichen rechteckige Kontur auszeichnen.

6. Transportband (1) nach einem der vorhergehenden Ansprüche, **dadurch gekennzeichnet, dass** sich die Beschichtungsstreifen (8) zumindest im Wesentlichen parallel zueinander erstrecken,
und/oder dass sich die Beschichtungsstreifen (8) durch eine Ausdehnung in Transportrichtung (T) des Bandes (1) auszeichnen, welche mindestens das Zehnfache, bevorzugt mindestens das Zwanzigfache, besonders bevorzugt mindestens das Fünfzigfache von deren Ausdehnung in Querrichtung (Q) beträgt,
und/oder dass sich zumindest einige Beschichtungsstreifen (8) durch eine zumindest im Wesentlichen gleiche Form und zumindest im Wesentlichen gleiche Dimensionierung auszeichnen,
und/oder dass die Ausdehnung der Beschichtungsstreifen (8) in Transportrichtung (T) mindestens 80%, bevorzugt mindesten 90%, besonders bevorzugt mindestens 100% der Ausdehnung des Trägers (7) in Transportrichtung (T) beträgt,
und/oder dass sich die Beschichtungsstreifen (8) in Transportrichtung (T) an einer Seite des Trägers (7) bis über den Träger (7) hinaus erstrecken, so dass sie in Endloskonfiguration des Bandes (1) Nahtklappen (16) bilden können,
und/oder dass die Beschichtungsstreifen (8) in Transportrichtung (T) an einer Seite des Trägers (7) in einem vorgegebenen Abstand vor dem Ende des Trägers (7) enden.

7. Transportband (1) nach einem der vorherigen Ansprüche, **dadurch gekennzeichnet, dass** die Ausdehnung des Bandes (1) in Transportrichtung (T) im Bereich von 1,5 m bis 10 m, bevorzugt 2,0 m bis 2,5 m oder 8,0 m bis 8,5 m liegt,
und/oder die Ausdehnung des Bandes (1) in Querrichtung (Q) im Bereich von 2,0 m bis 4,0 m, bevorzug 2,5 m bis 3,5 m liegt,
und/oder dass die Breite der Beschichtungsstreifen (8) im Bereich von 50 mm bis 150 mm, bevorzugt 70 mm bis 130 mm, besonders bevorzugt 90 mm bis 110 mm liegt,
und/oder dass der Abstand zwischen jeweils zwei benachbarten Beschichtungsstreifen (8) im Bereich von 20 bis 60 mm, bevorzugt 30 bis 50 mm, besonders bevorzugt 35 bis 45 mm liegt.

8. Transportband (1) nach einem der vorherigen Ansprüche, **dadurch gekennzeichnet, dass** wenigstens zehn Beschichtungsstreifen (8), bevorzugt wenigstens zwanzig Beschichtungsstreifen (8), besonders bevorzugt wenigstens dreißig Beschichtungsstreifen (8) vorgesehen sind,
und/oder die über die Vorderseite des Trägers (7) vorstehende Schichtdicke der Beschichtungsstreifen (8) im Bereich von 1,0 mm bis 5,0 mm, bevorzugt 2,0 mm bis 4,0 mm liegt,
und/oder dass die Dicke des Trägers (7) im Bereich im Bereich von 1,0 mm bis 5,0 mm, bevorzugt 1,5 bis 3,0 mm liegt,
und/oder dass die über die Vorderseite des Trägers (7) vorstehende Schichtdicke der Beschichtungsstreifen die Dicke des Trägers (7) übersteigt oder unterschreitet.

9. Transportband (1) nach einem der vorherigen Ansprüche, **dadurch gekennzeichnet, dass** an der Rückseite (6) des Bandes (1) Führungselemente (18) vorgesehen sind, die sich bevorzugt durch einen zumindest im Wesentlichen trapezförmigen Querschnitt auszeichnen, und/oder in die jeweils ein Abschnitt des Trägers (7) eingebettet ist, und/oder die nebeneinanderliegend auf einer bevorzugt zu einem Rand des Bandes (1) zumindest im Wesentlichen parallel verlaufenden Linie angeordnet sind.

10. Verwendung eines Transportbandes (1) nach einem der vorhergehenden Ansprüche in einer Fördereinrichtung oder in einer Kartonzuschnitt-Stapelmaschine.

11. Fördereinrichtung oder Kartonzuschnitt-Stapeleinrichtung, umfassend ein Transportband (1) nach einem der Ansprüche 1 bis 9, wobei die Fördereinrichtung oder die Kartonzuschnitt-Stapeleinrichtung bevorzugt eine Rollenbahn oder sonstige Walzenanordnung aufweist und das Transportband (1) die Rollenbahn bzw. sonstige Walzenanordnung in Endloskonfiguration umgreift.

12. Verfahren zur Herstellung eines Transportbandes (1), welches zur Verwendung in einer Fördereinrichtung oder einer Kartonzuschnitt-Stapelmaschine geeignet ist, und eine für die Auflage von Transportgut bestimmte Vorderseite (5) und eine von der Vorderseite (5) abgewandte Rückseite (6) aufweist, nach einem der Ansprüche 1 bis 9,
bei dem ein durch ein Spiralgliederband gegebener Träger (7) bereitgestellt wird und vorderseitig des Trägers (7) mehrere Beschichtungsstreifen (8) aus einem Beschichtungsmaterial hergestellt werden, insbesondere, indem vorderseitig des Trägers (7) in einem vorgegebenen Abstand von bevorzugt 1 bis 10 mm vor oder ohne Abstand unmittelbar auf dem Träger (7) eine den Träger (7) teilweise maskierende, mehrere bevorzugt längliche Maskierungsstreifen (12) umfassende Maskierungsanordnung (11) angeordnet wird, und Beschichtungsmaterial bzw. miteinander zu einem Beschichtungsmaterial reagierende Ausgangsstoffe auf den durch die Maskierungsanordnung (11) teilweise verdeckten Träger (7) insbesondere durch ein Sprüh-Verfahren aufgebracht wird bzw. werden und die Maskierungsanordnung (11) anschließend entfernt wird.

13. Verfahren nach Anspruch 12, **dadurch gekennzeichnet, dass** eine Maskierungsanordnung (11) verwendet wird, welche einen oder mehrere Maskierungsstreifen (12) umfasst, dessen bzw. deren Breite mit Abstand von der Vorderseite des Trägers (7) zunimmt, wobei der oder der jeweilige Maskierungsstreifen (12) bevorzugt zwei oder mehr übereinanderliegende Streifenelemente oder Streifenbereiche aufweist, die sich durch verschiedene Breiten auszeichnen, wobei besonders bevorzugt das Streifenelement geringster Breite der Vorderseite des Trägers (7) am nächsten liegend und das Streifenelement größter Breite von der Vorderseite am weitesten entfernt angeordnet ist bzw. wird, wenn die Maskierungsanordnung (11) vor dem Träger (7) positioniert ist bzw. wird,
und/oder dass eine Maskierungsanordnung (11) vor oder auf dem Träger (7) angeordnet wird, die wenigstens einen Maskierungsstreifen (12) umfasst, der sich durch eine Dicke im Bereich von 1 mm bis 12 mm, bevorzugt 3 mm bis 10 mm, besonders bevorzugt 5 mm bis 8 mm auszeichnet.

14. Verfahren nach Anspruch 12 oder 13, **dadurch gekennzeichnet, dass** eine Maskierungsanordnung vor oder auf dem Träger (7) angeordnet wird, die wenigstens einen Maskierungsstreifen (12) umfasst, der wenigstens eine Vertiefung (V) aufweist, die bevorzugt in der von dem Träger (7) abgewandten Oberseite des wenigstens einen Maskierungsstreifens (7) vorgesehen ist, und/oder durch eine sich in Längsrichtung des wenigstes einen Maskierungsstreifens (12) erstreckende Rille gegeben ist,
und/oder dass eine Maskierungsanordnung (11) vor oder auf dem Träger (7) angeordnet wird, die eine Mehrzahl von nebeneinanderliegenden, zumindest im Wesentlichen parallelen Maskierungsstreifen (12) mit zumindest im Wesentlichen gleicher Länge umfasst, deren auf der einen Seite liegenden Enden und deren auf der anderen Seite liegenden Enden jeweils über einen quer zu den Maskierungsstreifen (12) verlaufenden Naht-Maskierungsstreifen (13) miteinander verbunden sind.

15. Verfahren nach einem der Ansprüche 12 bis 14, **dadurch gekennzeichnet, dass** an der Rückseite des Trägers (7) von diesem abragende Führungselemente (18) hergestellt werden, bevorzugt, indem rückseitig des Trägers (7) und insbesondere zumindest im Wesentlichen parallel zu einer Längskante des Trägers (7) ein streifenförmiges Maskierungselement angeordnet wird, welches eine Mehrzahl von hintereinanderliegenden, voneinander beabstandeten Ausnehmungen aufweist, deren Innenkontur jeweils der Außenkontur eines Führungselementes (18) entspricht, wobei die Ausnehmungen bevorzugt jeweils an zwei gegenüberliegenden Seiten offen ausgebildet sind, und das Maskierungselement insbesondere derart auf dem Träger (7) angeordnet wird, dass jeweils eine der offenen Seiten der Ausnehmungen dem Träger (7) zugewandt ist, und die Ausnehmungen mit einem flüssigen Gießmaterial befüllt werden.

## Claims

1. Conveyor belt (1), in particular for use as an endless belt in a conveyor device or in a cardboard blank stacking device, which extends in a transport direction (T) and a transverse direction (Q) extending transversely to the transport direction (T), the conveyor belt (1) having a front side (5) intended for the support of goods to be transported and a rear side (6) facing away from the front side (5), the conveyor belt (1) comprising a carrier (7) and a plurality of coating strips (8) arranged at a distance from one another and consisting of a coating material, the carrier (7) being connected to the coating strips (8), in particular being at least partially embedded in the coating strips (8), , the carrier (7) being a spiral link belt, **characterized in that** the carrier (7) has regions (10) in which it is free of coating material, the carrier (7) not having coating material on either of its two sides or in its interior in these regions (10).

2. Conveyor belt (1) according to claim 1, **characterized in that** the coating strips (8) are produced from a coating material comprising or consisting of at least one polymer, in particular polyurea and/or polyurethane, and/or inthat the coating material of the coating strips (8) has been produced from a reactive system for producing an elastomer coating, preferably a multi-component system with two or more components, which is **characterized in** particular by a pot life of less than 30 seconds, preferably less than 15 seconds, particularly preferably less than 10 seconds,
and/or that the coating material of the coating strips (8) is **characterized by** a viscosity of less than 3000 mPa s, preferably less than 1000 mPa s, at a processing temperature in the range of 20°C to 120°C, preferably 60°C to 90°C, and/or that the coating strips (8) are **characterized by** a hardness in the range from 65 Shore A to 65 Shore D, and/or that the coating strips (8) are impermeable to air.

3. Conveyor belt (1) according to one of the preceding claims, **characterized in that** the coating strips (8) were obtained by applying the coating material to the carrier (7) by a spraying process, the coating strips (8) preferably being produced by arranging a masking arrangement (11) comprising masking strips (12) partially masking the carrier (7) at a predetermined distance of in particular 1 to 10 mm in front of or without a distance directly on the carrier (7) and applying the coating material or starting materials reacting with one another to form the coating material to the carrier (7) partially being concealed by the masking arrangement (11), in particular by a spraying process.

4. Conveyor belt (1) according to one of the preceding claims, **characterized in that** the carrier (7) is embedded in the coating strips (8) from their rear side in such a way that it does not extend up to the front sides of the coating strips (8),
and/or that the carrier (7) is permeable to air,
and/or that the front sides of the coating strips (8) form the front side (5) of the conveyor belt (1),
and/or that the rear side of the carrier (7) forms the rear side (6) of the conveyor belt (1).

5. Conveyor belt (1) according to one of the preceding claims, **characterized in that** the coating strips (8) are arranged adjacent to one another, and coating strips (8) and uncoated regions (10), in which the carrier (7) is free of coating material, preferably alternate,
and/or **in that** the extension of the coating strips (8) in the transverse direction (Q) decreases or increases in the direction of the front side (5) of the belt (1) over at least part of the extension of the coating strips (8) in this direction, and/or that the coating strips (8) are **characterized by** a substantially rectangular cross-section,
and/or at least two longitudinal edges (14) and/or at least two transverse edges (15) preferably of each coating strip (8), preferably the two longitudinal edges (14) and/or transverse edges (15) lying closer to or on the front side (5), in particular of each coating strip (8), are rounded,
and/or in that the coating strips (8) are **characterized by** an at least substantially rectangular contour when viewed from above on the front side (5) of the belt (1) in non-endless configuration.

6. Conveyor belt (1) according to one of the preceding claims, **characterized in that** the coating strips (8) extend at least substantially parallel to one another,
and/or that the coating strips (8) are **characterized by** an extension in the transport direction (T) of the belt (1) which is at least ten times, preferably at least twenty times, particularly preferably at least fifty times their extension in the transverse direction (Q),
and/or in that at least some coating strips (8) are **characterized by** at least substantially the same shape and at least substantially the same dimensions, and/or in that the extension of the coating strips (8) in the transport direction (T) is at least 80%, preferably at least 90%, particularly preferably at least 100% of the extension of the carrier (7) in the transport direction (T),
and/or in that the coating strips (8) extend in the transport direction (T) on one side of the carrier (7) beyond the carrier (7), so that they can form seam flaps (16) in the endless configuration of the belt (1),
and/or that the coating strips (8) end in the transport direction (T) on one side of the carrier (7) at a predetermined distance before the end of the carrier (7).

7. Conveyor belt (1) according to one of the preceding claims, **characterized in that** the extension of the belt (1) in the transport direction (T) is in the range of 1.5 m to 10 m, preferably 2.0 m to 2.5 m or 8.0 m to 8.5 m,
and/or the extension of the belt (1) in the transverse direction (Q) is in the range of 2.0 m to 4.0 m, preferably 2.5 m to 3.5 m,
and/or **in that** the width of the coating strips (8) is in the range of 50 mm to 150 mm, preferably 70 mm to 130 mm, particularly preferably 90 mm to 110 mm,
and/or that the distance between each two adjacent coating strips (8) is in the range of 20 to 60 mm, preferably 30 to 50 mm, particularly preferably 35 to 45 mm.

8. Conveyor belt (1) according to one of the preceding claims, **characterized in that** at least ten coating strips (8), preferably at least twenty coating strips (8), particularly preferably at least thirty coating strips (8) are provided,
and/or the layer thickness of the coating strips (8) projecting beyond the front side of the carrier (7) is in the range of1.0 mm to 5.0 mm, preferably 2.0 mm to 4.0 mm,
and/or that the thickness of the carrier (7) is in the range of 1.0 mm to 5.0 mm, preferably 1.5 to 3.0 mm,
and/or that the layer thickness of the coating strips project beyond the front side of the carrier (7) exceeds or falls below the thickness of the carrier (7).

9. Conveyor belt (1) according to one of the preceding claims, **characterized in that** guide elements (18) are provided on the rear side (6) of the belt (1), which are preferably **characterized by** an at least substantially trapezoidal cross-section, and/or in each of which a section of the carrier (7) is embedded, and/or which are arranged adjacent to one another on a line preferably running at least substantially parallel to an edge of the belt (1).

10. Use of a conveyor belt (1) according to one of the preceding claims in a conveyor device or in a cardboard blank stacking machine.

11. Conveyor device or cardboard blank stacking device, comprising a conveyor belt (1) according to one of claims 1 to 9, wherein the conveyor device or the cardboard blank stacking device preferably comprises a roller conveyor or other roller arrangement and the conveyor belt (1) embraces the roller conveyor or other roller arrangement in endless configuration.

12. Method for manufacturing a conveyor belt (1), which is suitable for use in a conveyor device or a cardboard blank stacking machine and which has a front side (5) intended for the support of goods to be transported and a rear side (6) facing away from the front side (5), according to one of claims 1 to 9, in which a carrier (7) given by a spiral link strip is provided and a plurality of coating strips (8) are produced from a coating material on the front side of the carrier (7), in particular by providing a masking arrangement (11), which partially masks the carrier (7) and comprises a plurality of preferably elongate masking strips (12), at a predetermined distance of preferably 1 to 10 mm in front of or without a distance directly on the carrier (7), and apply a coating material or starting materials reacting with one another to form a coating material to the carrier (7), partially being concealed by the masking arrangement (11), in particular by a spraying process, and subsequently removing the masking arrangement (11).

13. Method according to claim 12, **characterized in that** a masking arrangement (11) is used which comprises one or more masking strips (12) whose width increases with distance from the front of the carrier (7), the or each masking strip (12) preferably having two or more superimposed strip elements or strip regions which are **characterized by** different widths, wherein particularly preferably the strip element of smallest width is arranged closest to the front of the carrier (7) and the strip element of greatest width is arranged furthest away from the front when the masking arrangement (11) is positioned in front of the carrier (7),
and/or in that a masking arrangement (11) is arranged in front of or on the carrier (7), which comprises at least one masking strip (12), which is **characterized by** a thickness in the range of 1 mm to 12 mm, preferably 3 mm to 10 mm, particularly preferably 5 mm to 8 mm.

14. Method according to claim 12 or 13, **characterized in that** a masking arrangement is arranged in front of or on the carrier (7), which comprises at least one masking strip (12) having at least one recess (V), which preferably is provided in the upper side of the at least one masking strip (7) facing away from the carrier (7), and/or is given by a groove extending in the longitudinal direction of the at least one masking strip (12),
and/or **in that** a masking arrangement (11) is arranged in front of or on the carrier (7), which comprises a plurality of adjacent, at least substantially parallel masking strips (12) of at least substantially equal length, the ends of which lying on one side and the ends of which lying on the other side are each connected to one another via a seam masking strip (13) extending transversely to the masking strips (12).

15. Method according to one of claims 12 to 14, **characterized in that** guide elements (18) projecting from the carrier (7) are produced on the rear side of the carrier , preferably by arranging a strip-shaped masking element on the rear side of the carrier (7) and in particular at least substantially parallel to a longitudinal edge of the carrier (7), which masking element has a plurality of recesses lying one behind the other and spaced apart from one another, the inner contour of which corresponds in each case to the outer contour of a guide element (18), the recesses preferably being open on two opposite sides in each case, and the masking element being arranged on the carrier (7) in particular in such a way that in each case one of the open sides of the recesses faces the carrier (7), and the recesses are filled with a liquid casting material.

## Revendications

1. Bande transporteuse (1), en particulier pour l'utilisation comme bande sans fin dans un dispositif de transport ou dans un dispositif d'empilage de flans de carton, qui s'étend dans une direction de transport (T) et dans une direction transversale (Q) s'étendant transversalement à la direction de transport (T) et qui présente une face avant (5) destinée à l'application de la marchandise à transporter et une face arrière (6) opposée à la face avant (5), la bande transporteuse (1) comprenant un support (7) et une pluralité de bandes de revêtement (3) disposées à distance les unes des autres et constituées d'un matériau de revêtement, le support (7) étant relié aux bandes de revêtement (8), en particulier étant au moins partiellement encastré dans les bandes de revêtement (8), le support (7) étant une bande à maillons en spirale, **caractérisée en ce que** le support (7) présente des zones (10) dans lesquelles il est exempt de matériau de revêtement, le support (7) ne présentant de matériau de revêtement sur et dans ces zones (10) aucun de ses deux côtés et non plus à l'intérieur de celui-ci.

2. Bande transporteuse (1) selon la revendication 1, **caractérisée en ce que** les bandes de revêtement (8) sont fabriquées à partir d'un matériau de revêtement comprenant ou constitué d'au moins un polymère, en particulier de la polyurée et/ou du polyuréthane, et/ou
**en ce que** le matériau de revêtement des bandes de revêtement (8) est un matériau qui a été fabriqué à partir d'un système réactif pour la fabrication d'un revêtement élastomère, de préférence un système à plusieurs composants avec deux composants ou plus, qui se caractérise en particulier par une durée de vie en pot de moins de 30 secondes, de préférence de moins de 15 secondes, de manière particulièrement préférée de moins de 10 secondes,
et/ou **en ce que** le matériau de revêtement des bandes de revêtement (8) est un matériau qui se **caractérise par** une viscosité inférieure à 3000 mPa s, de préférence inférieure à 1000 mPa s, à une température de traitement située dans la plage de 20°C à 120°C, de préférence de 60°C à 90°C, et/ou en ce que les bandes de revêtement (8) se caractérisent par une dureté située dans la plage de 65 Shore A à 65 Shore D, et/ou en ce que les bandes de revêtement (8) sont imperméables à l'air.

3. Bande transporteuse (1) selon l'une des revendications précédentes, **caractérisée en ce que** les bandes de revêtement (8) ont été obtenues en appliquant le matériau de revêtement sur le support (7) par un procédé de pulvérisation, les bandes de revêtement (8) étant de préférence fabriquées en disposant sur le côté avant, à une distance prédéfinie, en particulier de 1 à 10 mm, avant ou sans distance, directement sur le support (7), un dispositif de masquage (11) comprenant des bandes de masquage (12) et masquant partiellement le support (7), et en appliquant le matériau de revêtement ou les matériaux de revêtement, respectivement, sur le support (7), de manière à ce que les bandes de masquage (12) soient masquées par le matériau de revêtement. des substances de départ réagissant entre elles pour former le matériau de revêtement ont été ou sont appliquées sur le support (7) partiellement recouvert par l'agencement de masquage (11), en particulier par un procédé de pulvérisation.

4. Bande transporteuse (1) selon l'une des revendications précédentes, **caractérisée en ce que** le support (7) est noyé à l'arrière des bandes de revêtement (8) de telle sorte qu'il ne s'étend pas jusqu'aux faces avant des bandes de revêtement (8),
et/ou **en ce que** le support (7) est perméable à l'air,
et/ou **en ce que** les faces avant des bandes de revêtement (8) forment la face avant (5) de la bande transporteuse (1),
et/ou **en ce que** la face arrière du support (7) forme la face arrière (6) de la bande transporteuse (1).

5. Bande transporteuse (1) selon l'une des revendications précédentes, **caractérisée en ce que** les bandes de revêtement (8) sont disposées côte à côte, et **en ce qu'**il y a de préférence une alternance de bandes de revêtement (8) et de zones non revêtues (10) dans lesquelles le support (7) est exempt de matériau de revêtement,
et/ou **en ce que** l'extension des bandes de revêtement (8) dans la direction transversale (Q) en direction de la face avant (5) de la bande (1) diminue ou augmente au moins sur une partie de l'extension des bandes de revêtement (8) dans cette direction,
et/ou **en ce que** les bandes de revêtement (8) se caractérisent par une section transversale essentiellement quadrangulaire,
et/ou au moins deux arêtes longitudinales (14) et/ou au moins deux arêtes transversales (15) de préférence de chaque bande de revêtement (8), de préférence les deux arêtes longitudinales (14) et/ou arêtes transversales (15) situées plus près de la face avant (5) ou contre celle-ci, en particulier de chaque bande de revêtement (8), sont arrondies,
et/ou **en ce que** les bandes de revêtement (8) se distinguent par un contour au moins sensiblement rectangulaire lorsqu'on les observe en vue de dessus sur la face avant (5) de la bande (1) en configuration non continue.

6. Bande transporteuse (1) selon l'une des revendications précédentes, **caractérisée en ce que** les bandes de revêtement (8) s'étendent au moins sensiblement parallèlement les unes aux autres,
et/ou **en ce que** les bandes de revêtement (8) se caractérisent par une extension dans la direction de transport (T) de la bande (1) qui est au moins le décuple, de préférence au moins le vingtuple, de manière particulièrement préférée au moins le cinquantième de leur extension dans la direction transversale (Q),
et/ou **en ce qu'**au moins quelques bandes de revêtement (8) se caractérisent par une forme au moins sensiblement identique et des dimensions au moins sensiblement identiques,
et/ou **en ce que** l'extension des bandes de revêtement (8) dans la direction de transport (T) représente au moins 80%, de préférence au moins 90%, de manière particulièrement préférée au moins 100% de l'extension du support (7) dans la direction de transport (T),
et/ou **en ce que** les bandes de revêtement (8) s'étendent dans la direction de transport (T) sur un côté du support (7) jusqu'au-delà du support (7), de sorte qu'elles peuvent former des rabats de couture (16) dans la configuration sans fin de la bande (1),
et/ou **en ce que** les bandes de revêtement (8) se terminent dans la direction de transport (T) sur un côté du support (7) à une distance prédéfinie avant l'extrémité du support (7).

7. Bande transporteuse (1) selon l'une des revendications précédentes, **caractérisée en ce que** l'extension de la bande (1) dans la direction de transport (T) se situe dans la plage de 1,5 m à 10 m, de préférence de 2,0 m à 2,5 m ou de 8,0 m à 8,5 m,
et/ou l'extension de la bande (1) dans la direction transversale (Q) se situe dans la plage de 2,0 m à 4,0 m, de préférence de 2,5 m à 3,5 m,
et/ou **en ce que** la largeur des bandes de revêtement (8) se situe dans la plage de 50 mm à 150 mm, de préférence de 70 mm à 130 mm, de manière particulièrement préférée de 90 mm à 110 mm,
et/ou **en ce que** la distance entre respectivement deux bandes de revêtement (8) voisines se situe dans la plage de 20 à 60 mm, de préférence de 30 à 50 mm, de manière particulièrement préférée de 35 à 45 mm.

8. Bande transporteuse (1) selon l'une des revendications précédentes, **caractérisée en ce qu'**il est prévu au moins dix bandes de revêtement (8), de préférence au moins vingt bandes de revêtement (8), de manière particulièrement préférée au moins trente bandes de revêtement (8),
et/ou l'épaisseur de couche des bandes de revêtement (8) dépassant de la face avant du support (7) se situe dans la plage de 1,0 mm à 5,0 mm, de préférence de 2,0 mm à 4,0 mm,
et/ou **en ce que** l'épaisseur du support (7) se situe dans la plage de 1,0 mm à 5,0 mm, de préférence de 1,5 à 3,0 mm,
et/ou **en ce que** l'épaisseur de couche des bandes de revêtement dépassant de la face avant du support (7) est supérieure ou inférieure à l'épaisseur du support (7).

9. Bande transporteuse (1) selon l'une des revendications précédentes, **caractérisée en ce qu'**il est prévu sur la face arrière (6) de la bande (1) des éléments de guidage (18) qui se caractérisent de préférence par une section transversale au moins sensiblement trapézoïdale, et/ou dans lesquels est noyé respectivement un tronçon du support (7), et/ou qui sont disposés côte à côte sur une ligne s'étendant de préférence au moins sensiblement parallèlement à un bord de la bande (1).

10. Utilisation d'une bande transporteuse (1) selon l'une des revendications précédentes dans un dispositif de transport ou dans une machine d'empilage de découpes de carton.

11. Dispositif de transport ou dispositif d'empilage de découpes de carton, comprenant une bande transporteuse (1) selon l'une des revendications 1 à 9, le dispositif de transport ou le dispositif d'empilage de découpes de carton présentant de préférence un convoyeur à rouleaux ou un autre agencement de rouleaux et la bande transporteuse (1) entourant le convoyeur à rouleaux ou un autre agencement de rouleaux en configuration sans fin.

12. Procédé de fabrication d'une bande transporteuse (1) adaptée
pour être utilisée dans un dispositif de transport ou une machine d'empilage de découpes de carton, et présentant une face avant (5) destinée à recevoir des produits à transporter et une face arrière (6) opposée à la face avant (5), selon l'une des revendications 1 à 9,
dans lequel un support (7) donné par une bande à maillons en spirale est mis à disposition et plusieurs bandes de revêtement (8) sont fabriquées à partir d'un matériau de revêtement sur le côté avant du support (7), en particulier en disposant sur le côté avant du support (7), à une distance prédéfinie de préférence de 1 à 10 mm, avant ou sans distance, directement sur le support (7), un agencement de masquage (11) masquant partiellement le support (7) et comprenant plusieurs bandes de masquage (12) de préférence allongées, et en appliquant un matériau de revêtement ou des matériaux de revêtement sur le côté avant du support (7). des substances de départ réagissant entre elles pour former un matériau de revêtement sont appliquées sur le support (7) partiellement masqué par l'agencement de masquage (11), en particulier par un procédé de pulvérisation, et l'agencement de masquage (11) est ensuite retiré.

13. Procédé selon la revendication 12, **caractérisé en ce que** l'on utilise un ensemble de masquage (11) qui comprend une ou plusieurs bandes de masquage (12) dont la longueur s'allonge au fur et à mesure que l'on s'éloigne de la face avant, dont la largeur augmente à mesure que l'on s'éloigne de la face avant du support (7), la ou chaque bande de masquage (12) présentant de préférence deux ou plusieurs éléments de bande ou zones de bande superposés qui se caractérisent par des largeurs différentes, l'élément de bande de plus faible largeur étant de préférence le plus proche de la face avant du support (7) et l'élément de bande de plus grande largeur étant le plus éloigné de la face avant lorsque l'ensemble de masquage (11) est positionné devant le support (7),
et/ou **en ce qu'**un agencement de masquage (11) est disposé devant ou sur le support (7), lequel comprend au moins une bande de masquage (12) qui se **caractérise par** une épaisseur dans la plage de 1 mm à 12 mm, de préférence de 3 mm à 10 mm, de manière particulièrement préférée de 5 mm à 8 mm.

14. Procédé selon la revendication 12 ou 13, **caractérisé en ce qu'**un agencement de masquage est disposé devant ou sur le support (7), lequel comprend au moins une bande de masquage (12) qui présente au moins un renfoncement (V) qui est prévu de préférence dans la face supérieure, opposée au support (7), de la au moins une bande de masquage (7), et/ou est donné par une rainure s'étendant dans la direction longitudinale de la au moins une bande de masquage (12),
et/ou **en ce qu'**un agencement de masquage (11) est disposé devant ou sur le support (7), qui comprend une pluralité de bandes de masquage (12) juxtaposées, au moins sensiblement parallèles, de longueur au moins sensiblement égale, dont les extrémités situées d'un côté et les extrémités situées de l'autre côté sont reliées entre elles respectivement par une bande de masquage à couture (13) s'étendant transversalement aux bandes de masquage (12).

15. Procédé selon l'une des revendications 12 à 14, **caractérisé en ce que** des éléments de guidage (18) dépassant du support (7) sont fabriqués sur la face arrière de celui-ci, de préférence en disposant sur la face arrière du support (7) et en particulier au moins sensiblement parallèlement à un bord longitudinal du support (7) un élément de masquage en forme de bande, qui présente une pluralité d'évidements espacés les uns des autres et situés les uns derrière les autres, dont le contour intérieur correspond respectivement au contour extérieur d'un élément de guidage (18), les évidements étant de préférence réalisés ouverts respectivement sur deux côtés opposés, et l'élément de masquage étant disposé en particulier sur le support (7) de telle sorte que respectivement l'un des côtés ouverts des évidements est tourné vers le support (7), et les évidements étant remplis d'un matériau de coulée liquide.
